# EUROPEAN PATENT APPLICATION

(11) **EP 4 386 130 A1**
(43) Date of publication of application: **19.06.2024**
(21) Application number: 22863529.8
(22) Date of filing: 31.08.2022
(51) Int. Cl.: D06F 58/04

(54) **LAUNDRY TREATMENT APPARATUS**

(30) Priority: 01.09.2021 CN 202111023112; 30.11.2021 CN 202111450553
(71) Applicant: Shenzhen Roborock Innovation Technology Co., Ltd., Shenzhen, Guangdong 518000 (CN)
(72) Inventor: LI, Xing, Shenzhen, Guangdong 518000 (CN); DUAN, Chuanlin, Shenzhen, Guangdong 518000 (CN); YAN, Yadong, Shenzhen, Guangdong 518000 (CN); HUANG, Jibai, Shenzhen, Guangdong 518000 (CN); YANG, Zhimin, Shenzhen, Guangdong 518000 (CN); WANG, Zhe, Shenzhen, Guangdong 518000 (CN); LIU, Ming, Shenzhen, Guangdong 518000 (CN); LIN, Chenghu, Shenzhen, Guangdong 518000 (CN); FANG, Junjun, Shenzhen, Guangdong 518000 (CN); QI, Hang, Shenzhen, Guangdong 518000 (CN); XU, Ming, Shenzhen, Guangdong 518000 (CN); LIU, Tong, Shenzhen, Guangdong 518000 (CN); QUAN, Gang, Shenzhen, Guangdong 518000 (CN)
(74) Representative: Manitz Finsterwald Patent- und Rechtsanwaltspartnerschaft mbB
(86) International application number: PCT/CN2022/116242
(87) International publication number: WO 2023/030394

(57) **Abstract**

A laundry treatment apparatus, comprising: an inner tub (30) for accommodating an item of laundry to be treated; and a drying module (20) for drying the laundry. The drying module (20) comprises: a moisture absorption channel (201), which comprises a first air inlet (611) and a first air outlet (612), the first air inlet (611) and the first air outlet (612) separately being in communication with the inner tub (30); a circulating fan (2100), which is arranged in the moisture absorption channel (520) and used for forming a circulating airflow in the inner tub (30) and the moisture absorption channel (520); a regeneration channel; a regeneration fan, which is arranged in the regeneration channel and used for forming a moisture discharging airflow in the regeneration channel; a moisture absorption member (2200), which is arranged on the moisture absorption channel and the regeneration channel, both the circulating airflow and the moisture discharging airflow passing through the moisture absorption component (2200); and a drive mechanism, which is used for moving the moisture absorption member relative to the moisture absorption channel and the regeneration channel, wherein the moisture absorption member (2200) is used for absorbing moisture in the circulating airflow during moving relative to the moisture absorption channel and the regeneration channel, and discharging the moisture by means of the moisture discharging airflow.

## Description

### CROSS-REFERENCE TO RELATED APPLICATION

The present application claims priorities to Chinese Patent Application No. 202111023112.5 filed on September 1, 2021 and the Chinese patent application No. 202111450553.3 filed on November 30, 2021, the entire content of which is incorporated herein by reference.

### TECHNICAL FIELD

The present disclosure relates to the field of household appliances, and particularly, to a laundry treating device.

### BACKGROUND

In daily life, people usually use an airing method to dry washed laundry. Airing laundry is greatly affected by weather factors, so effective drying of laundry is hardly achieved in humid and dark weather. Dryers are increasingly popular with consumers because they may dry washed laundry.

### SUMMARY

It would be advantageous to provide a mechanism to mitigate, alleviate or even eliminate one or more of the above problems.

Embodiments of the present disclosure provide a laundry treating device. The laundry treating device includes: an inner tub configured to accommodate laundry to be treated; and a drying module assembly configured to dry the laundry, wherein the drying module assembly includes a moisture-absorbing passage, the moisture-absorbing passage including a first air inlet and a first air outlet, the first air inlet and the first air outlet being respectively communicated with the inner tub; a circulating fan disposed in the moisture-absorbing passage and configured to form a circulating airflow inside the inner tub and the moisture-absorbing passage; a regenerating passage; a regenerating fan disposed in the regenerating passage and configured to form a dehumidifying airflow inside the regenerating passage; a moisture-absorbing member disposed on the moisture-absorbing passage and the regenerating passage, the circulating airflow and the dehumidifying airflow both flowing through the moisture-absorbing member; and a driving mechanism configured to move the moisture-absorbing member relative to the moisture-absorbing passage and the regenerating passage, wherein the moisture-absorbing member is configured to absorb moisture in the circulating airflow in the process of moving relative to the moisture-absorbing passage and the regenerating passage, and discharge the moisture through the dehumidifying airflow.

These and other aspects of the present disclosure will be clear according to embodiments described below and clarified with reference to the embodiments described below.

### BRIEF DESCRIPTION OF THE DRAWINGS

In the accompanying drawings, unless otherwise specified, identical symbols throughout a plurality of drawings indicate identical or similar components or elements. These accompanying drawings are not necessarily drawn to scale. It should be understood that these accompanying drawings only depict some embodiments disclosed in the present disclosure and should not be considered as limiting the scope of the present disclosure.

FIGs. 1 to 6 are schematic diagrams of an integrated washer-dryer according to some embodiments of the present disclosure, in which:
FIG. 1 is a perspective view of the integrated washer-dryer according to some embodiments of the present disclosure;
FIG. 2 is a sectional view of FIG. 1;
FIG. 3 is a locally enlarged view of FIG. 2;
FIG. 4 is an exploded view of FIG. 3;
FIG. 5 is an overall structural diagram of a drying module assembly;
FIG. 6 is a structural diagram of a temperature sensor, a moisture-absorbing passage and a regenerating passage;
FIGs. 7 to 43 are schematic diagrams of an integrated washer-dryer according to some embodiments of the present disclosure, in which:

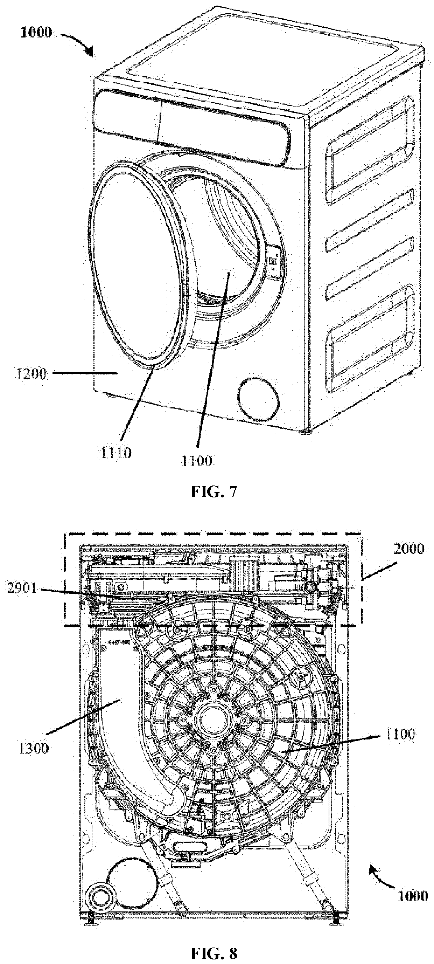

FIGs. 7 to 9 are a perspective view, a rear view and a top view of the integrated washer-dryer respectively according to some embodiments of the present disclosure;

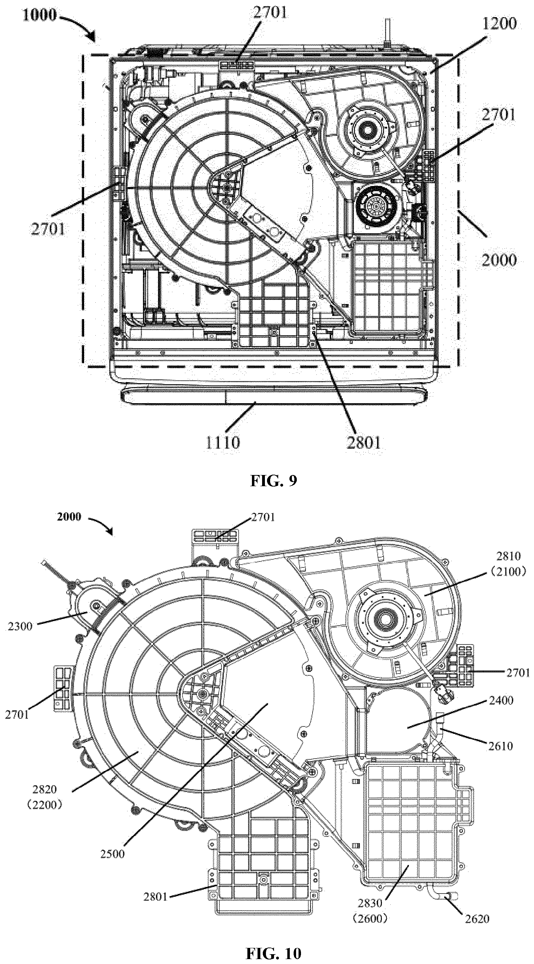

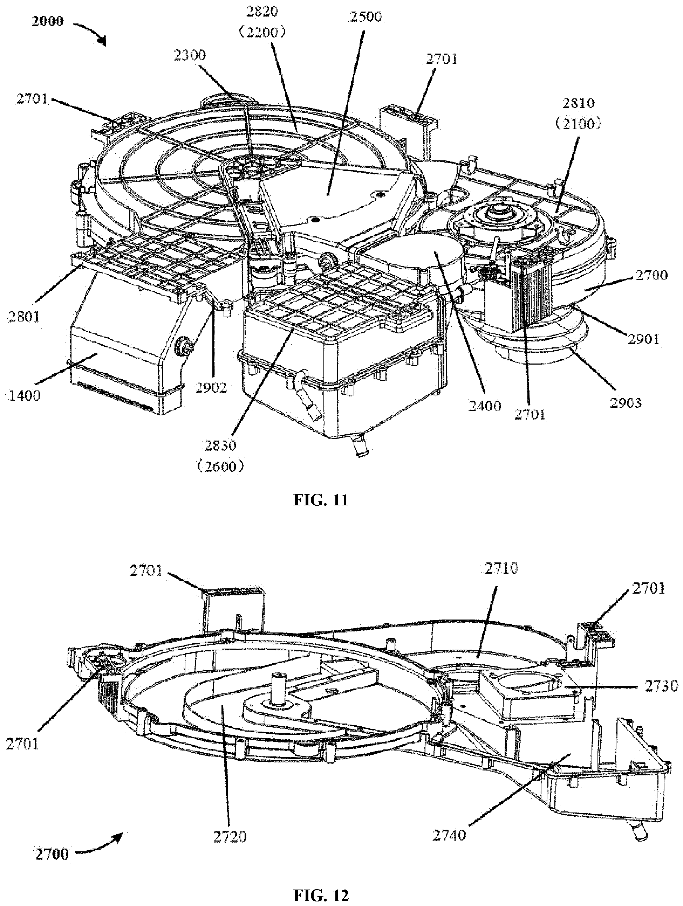

FIGs. 10 and 11 are a top view and a perspective view of the drying module assembly in FIG. 8 and FIG. 9, respectively;
FIG. 12 is a structural diagram of a lower housing of the drying module assembly;

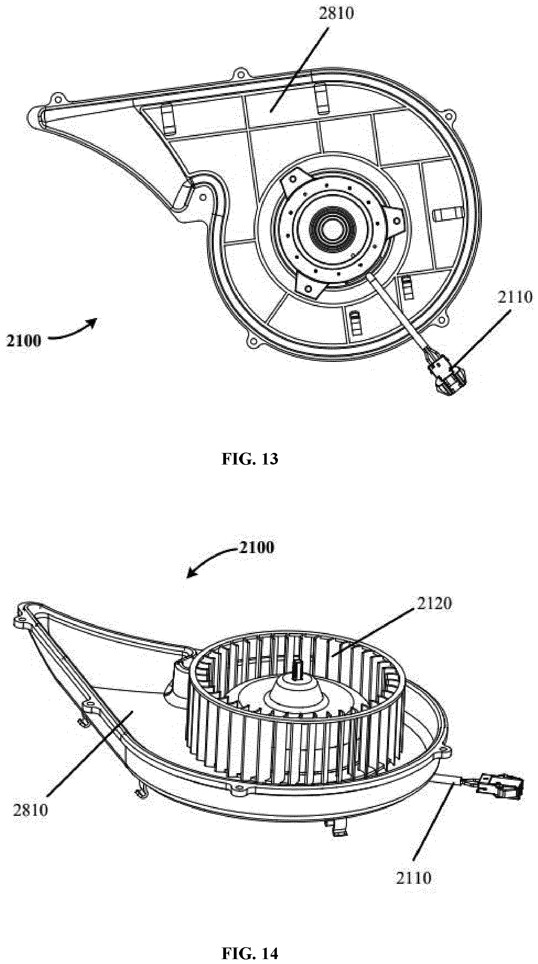

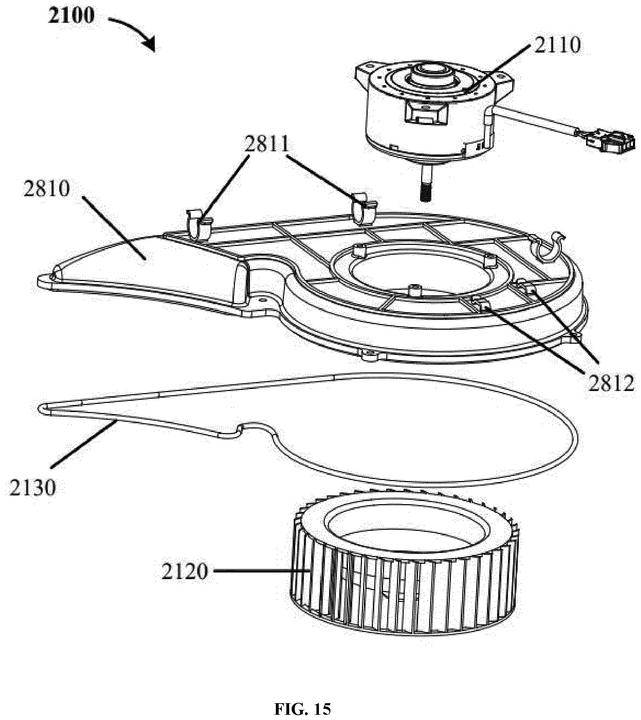

FIGs. 13 to 15 are a top view, a bottom view and an exploded view of a circulating fan, respectively;

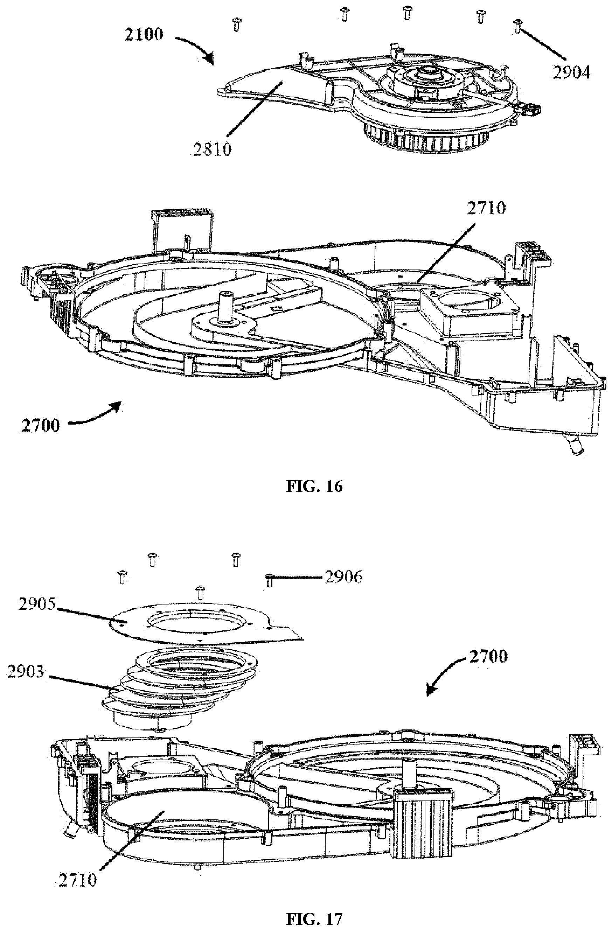

FIG. 16 is a structural diagram of a cooperating mode of the circulating fan and the lower housing of the drying module assembly;
FIG. 17 is a schematic diagram of a connecting mode of a flexible pipe and the lower housing;

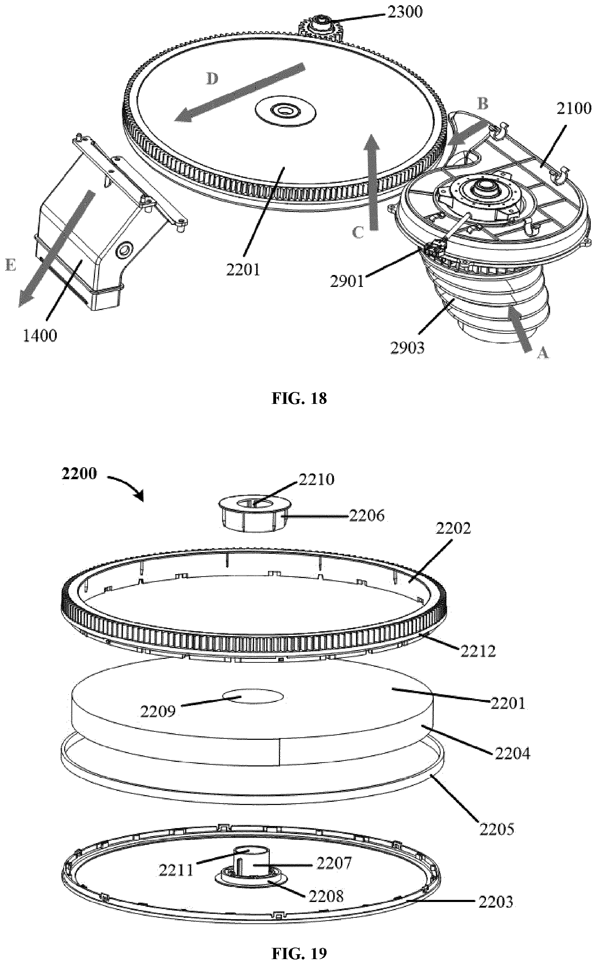

FIG. 18 is a structural diagram of a flow direction of a circulating airflow;

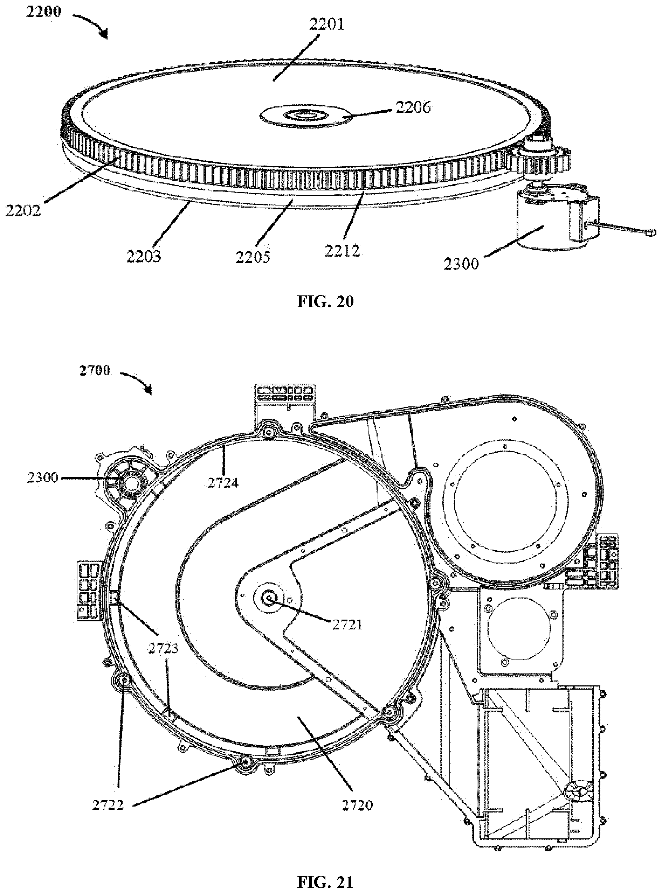

FIG. 19 and FIG. 20 are an exploded view of a moisture-absorbing member and a perspective view upon the completion of assembly, respectively;
FIG. 21 is a top view of the lower housing;

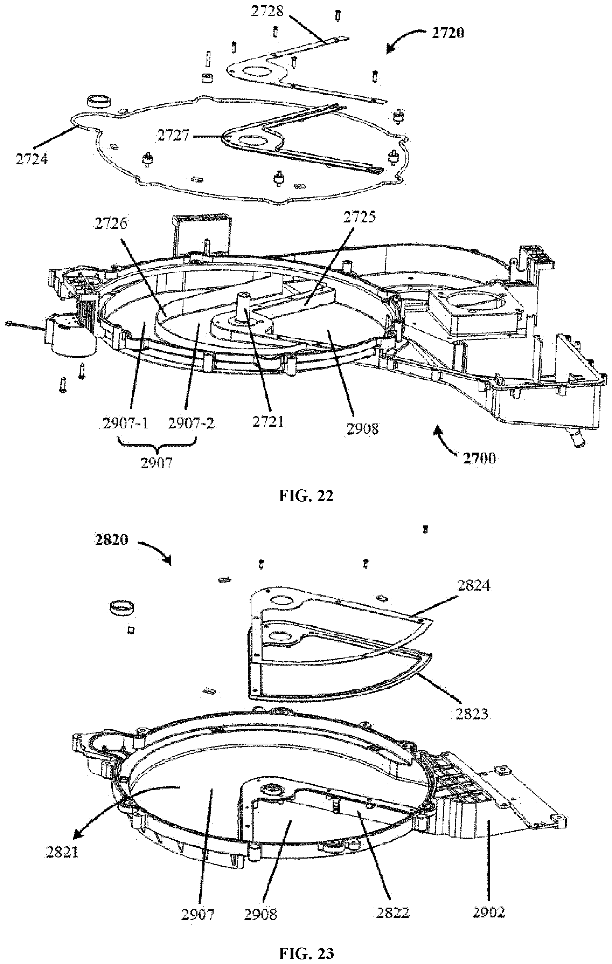

FIG. 22 and FIG. 23 are exploded views of a first mounting part of the lower housing and of an upper housing respectively;

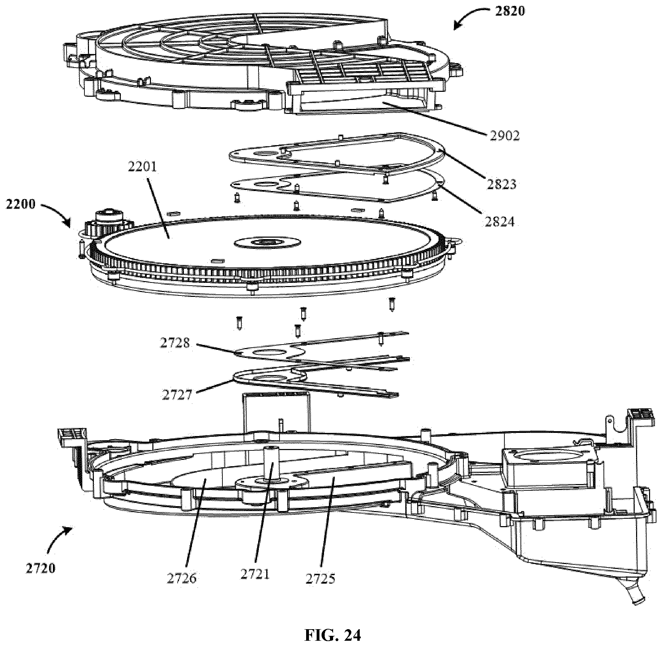

FIG. 24 is an exploded view upon the mounting of the first mounting part, the upper housing and the moisture-absorbing member;

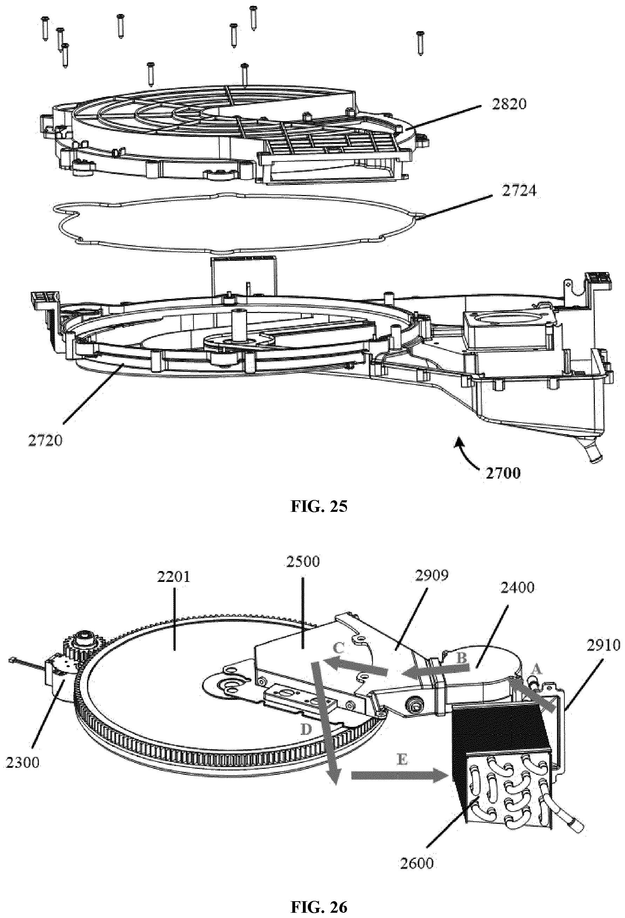

FIG. 25 is a schematic diagram of a fixing mode of an integrated lower housing and the upper housing of the moisture-absorbing member;
FIG. 26 is a schematic diagram of a flow direction of a dehumidifying airflow;

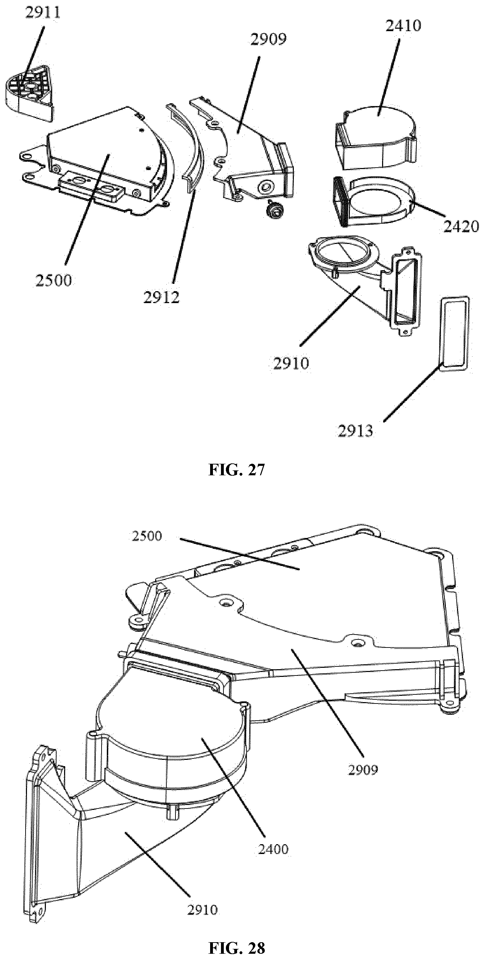

FIG. 27 and FIG. 28 are an exploded view and a perspective view of related structures of a heating assembly and a regenerating fan, respectively;

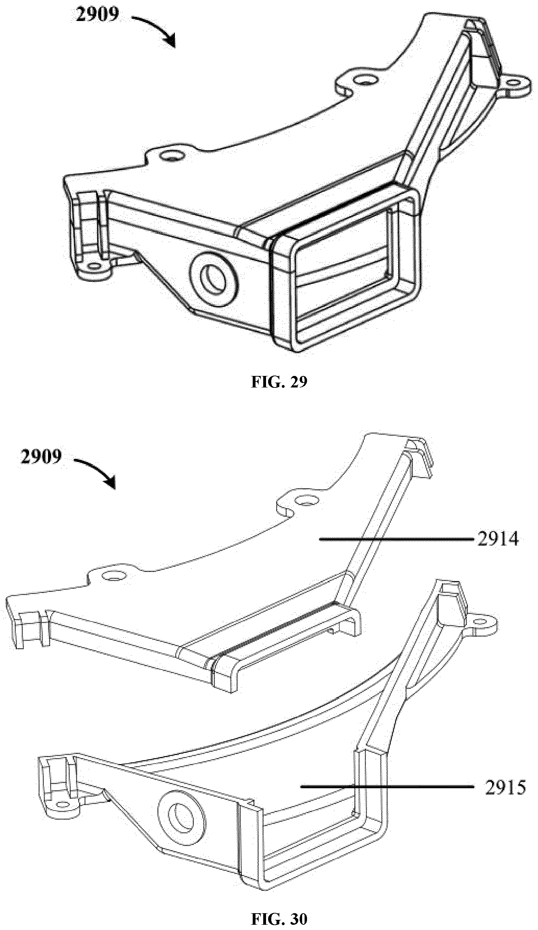

FIG. 29 to FIG. 30 are a perspective view and an exploded view of a first connector, respectively;

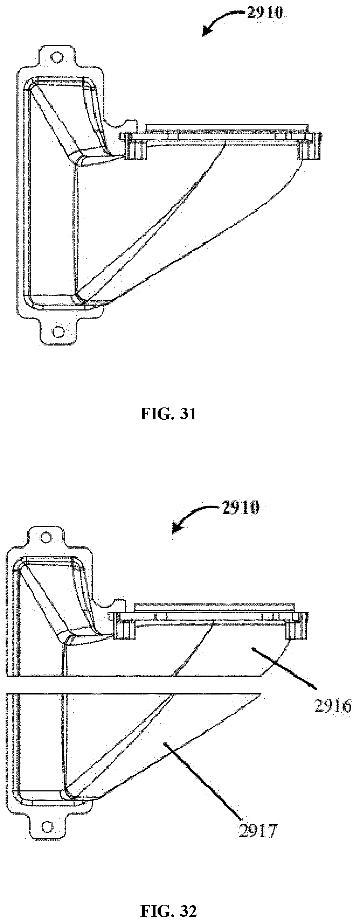

FIG. 31 and FIG. 32 are a perspective view and an exploded view of a second connector, respectively;

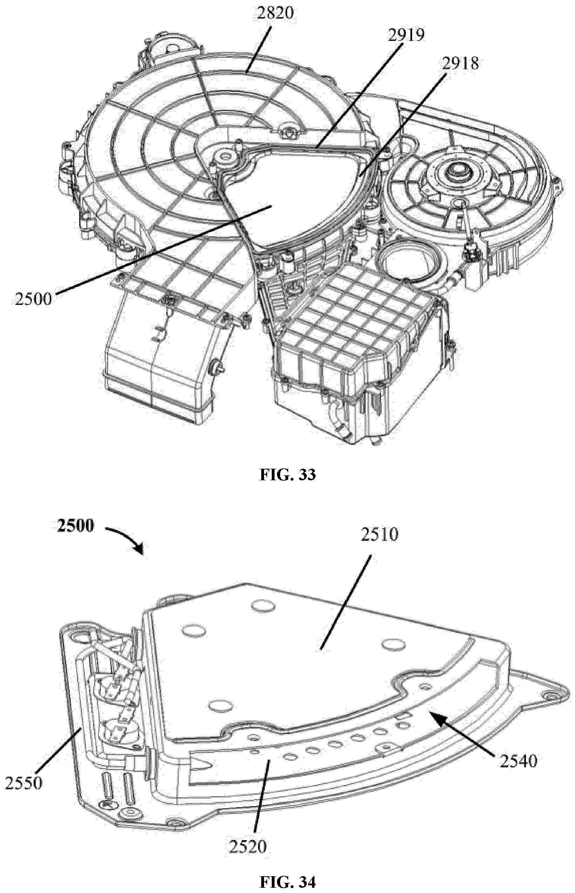

FIG. 33 is a schematic diagram of a mounting position of the heating assembly on the upper housing;
FIGs. 34 to 36 are a perspective view of the heating assembly, a schematic diagram of a mesh plate and a bottom view of the heating assembly, respectively;

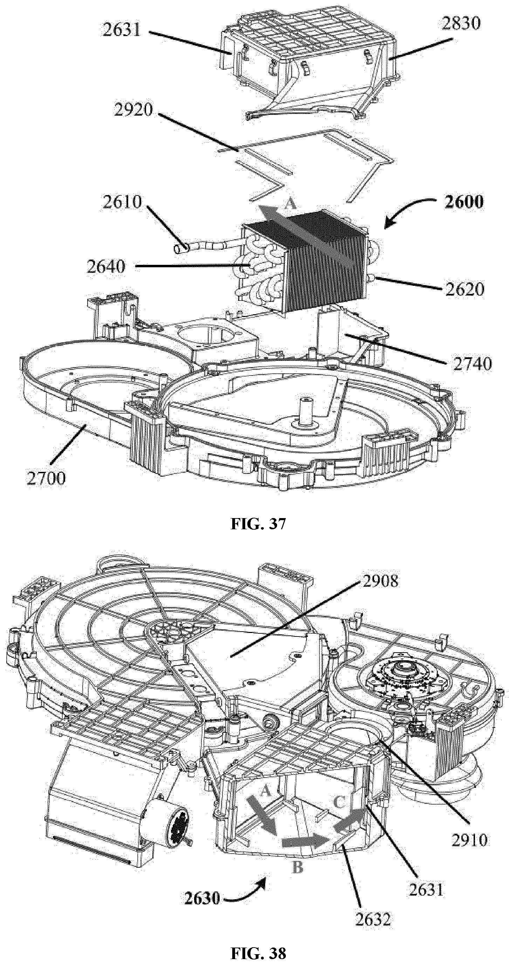

FIG. 37 is a schematic diagram of a fixing mode of a condenser and the lower housing;
FIG. 38 is a sectional view of a condenser housing;

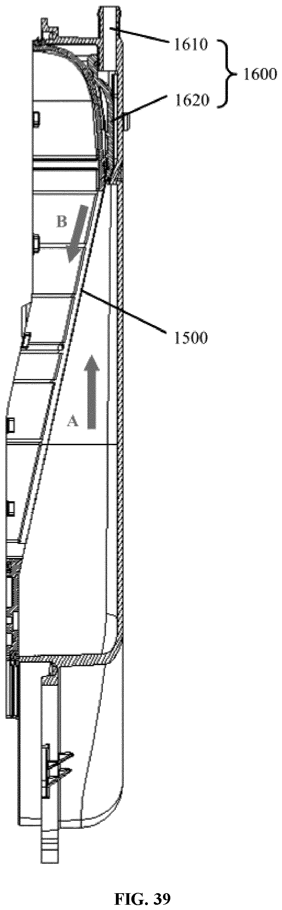

FIG. 39 is a schematic diagram of a filter and a spraying mechanism configured to clean the filter automatically;

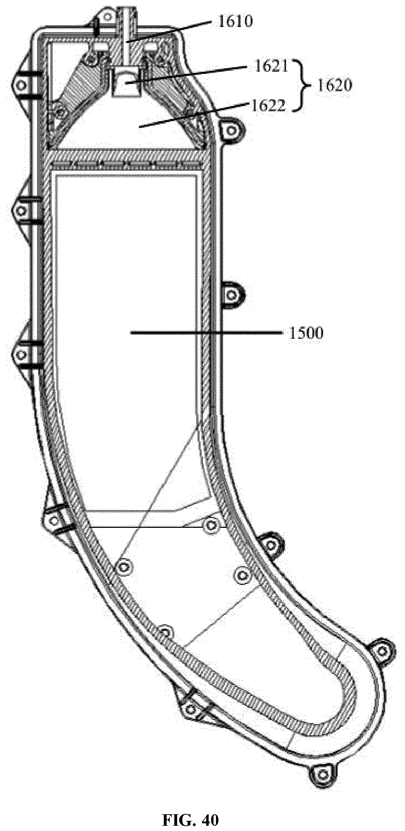

FIG. 40 is a detailed drawing of a water outlet pipe and a nozzle in FIG. 39;

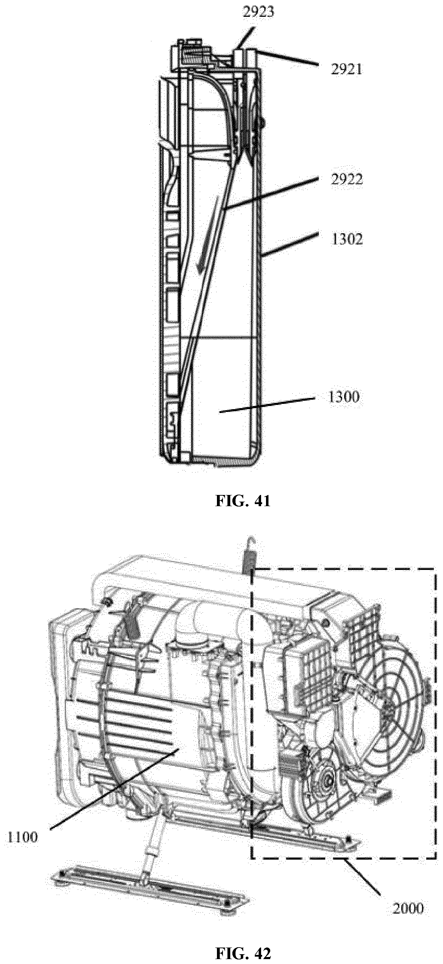

FIG. 41 is a schematic diagram of a condenser, a filter screen and a cleaning assembly thereof in an air outlet pipeline of the inner tub;

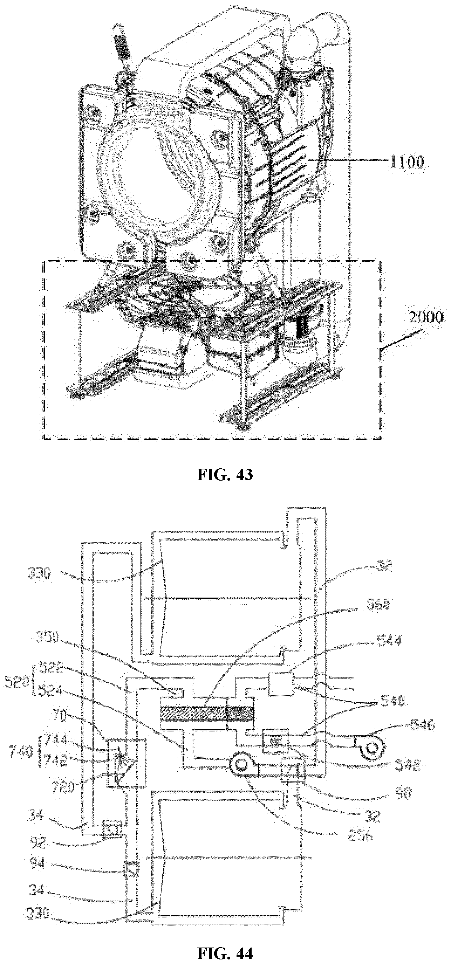

FIG. 42 and FIG. 43 are structural diagrams of other mounting positions of the drying module assembly, respectively;
FIGs. 44 to 47 are schematic diagrams of an integrated washer-dryer according to some embodiments of the present disclosure, in which:
FIG. 44 is a schematic structural diagram of the integrated washer-dryer according to some embodiments of the present disclosure;

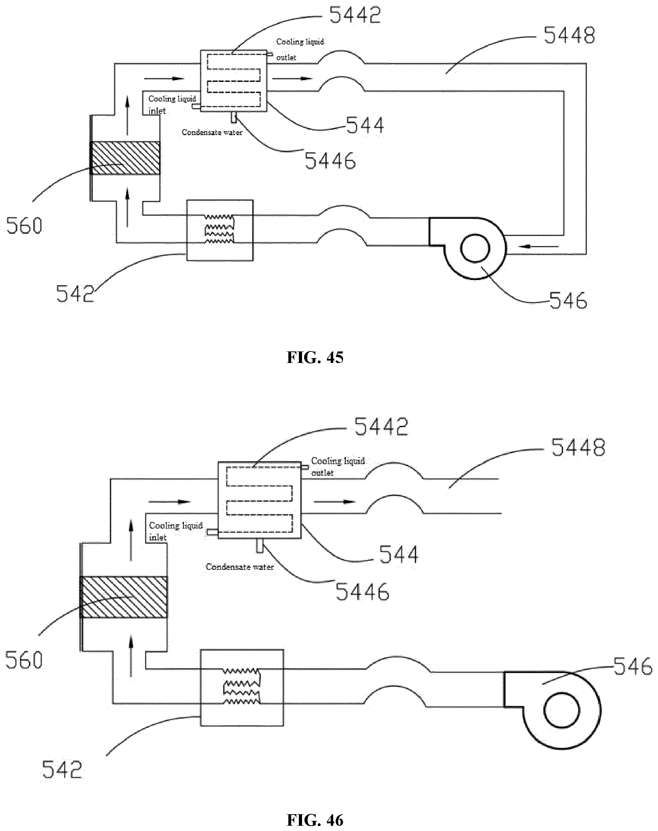

FIG. 45 is a schematic structural diagram of a dehumidifying passage according to an embodiment;
FIG. 46 is a schematic structural diagram of a dehumidifying passage according to another embodiment; and

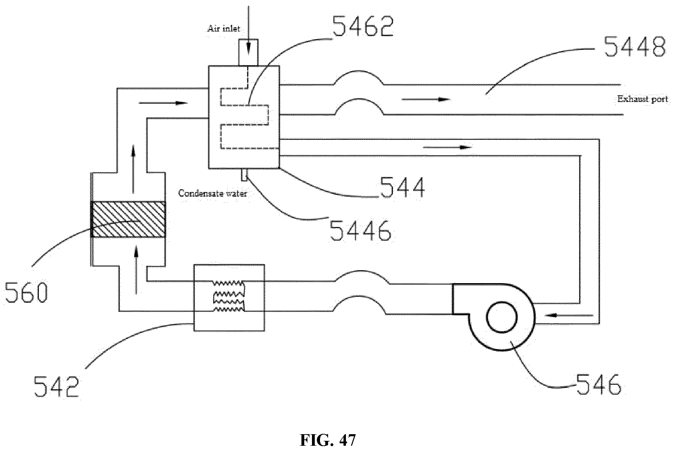

FIG. 47 is a schematic structural diagram of a dehumidifying passage according to yet another embodiment.

### DETAILED DESCRIPTION

In the present disclosure, unless otherwise specified, the terms "first", "second" and the like, which are used to describe various elements, are not intended to limit their positional, chronological, or importance relationships. Such terms are only used to distinguish one element from another element. In some examples, the first and second elements may point to the same example of these elements, and in some cases, they may refer to different examples based on the context.

As used herein, the term "regenerating" refers to a process or an operation in which an originally relatively dry object restores to a relatively dry state by at least partial dehumidification after absorbing moisture. The terms "upstream" and "downstream" are used to indicate a relative position of a second element encountered by an airflow after the airflow flows through the first element when the airflow flows in a flow path starting from an air inlet, wherein the first element is disposed "upstream" of the second element and the second element is disposed "downstream" of the first element.

The terms used in the descriptions of various described examples in the present disclosure are intended only for the purpose of describing specific examples and are not intended to limit them. Unless otherwise indicated clearly in context, an element may be one or more if the number of elements is not intentionally limited. Further, the term "and/or" as used in the present disclosure covers any of the listed items and all possible combinations, and the phrase "at least one of A and B" refers to A alone, B alone, or both A and B.

In related technologies, an evaporator is generally used by a dryer to heat and absorb moist air in a laundry accommodating space (e.g., inner tub) to obtain high-temperature air. The high-temperature air re-enters the laundry accommodating space, allowing moisture in the laundry to evaporate. However, the overall temperature of the evaporator is consistent. In the process in which moist air enters the evaporator, the moisture-absorbing capacity of the evaporator to the moist air decreases, resulting in low moisture-absorbing efficiency, long drying time and high power consumption. Especially for areas of lower temperature, the temperature of the moist air is also reduced, such that the temperature of the evaporator is difficult to reach a moisture-absorbing temperature, resulting in further reduction of moisture-absorbing efficiency, longer drying time and higher power consumption.

In view of the above problems, an embodiment of the present disclosure provides a laundry treating device. The laundry treating device according to this embodiment of the present disclosure includes an inner tub configured to accommodate laundry to be treated, and a drying module assembly configured to dry the laundry inside the inner tub. The drying module assembly includes a moisture-absorbing passage, the moisture-absorbing passage including a first air inlet and a first air outlet, the first air inlet and the first air outlet being respectively communicated with the inner tub; a circulating fan disposed in the moisture-absorbing passage and configured to form a circulating airflow inside the inner tub and the moisture-absorbing passage; a regenerating passage; a regenerating fan disposed in the regenerating passage and configured to form a dehumidifying airflow inside the regenerating passage; a moisture-absorbing member disposed on the moisture-absorbing passage and the regenerating passage, the circulating airflow and the dehumidifying airflow both flowing through the moisture-absorbing member; and a driving mechanism configured to move the moisture-absorbing member relative to the moisture-absorbing passage and the regenerating passage. The moisture-absorbing member absorbs moisture in the circulating airflow in the process of moving relative to the moisture-absorbing passage and the regenerating passage, and discharges the absorbed moisture through the dehumidifying airflow.

Compared with the dryer using the evaporator, the laundry treating device in this embodiment has a smaller size, higher drying efficiency, higher economy and lower energy consumption.

In this embodiment of the present disclosure, the laundry treating device has a laundry drying function. The laundry treating device may be, for example, a dryer having only a laundry drying function, or an integrated washer-dryer having both a laundry washing function and a laundry drying function.

According to some embodiments, the moisture-absorbing member is provided with a moisture absorbent. The moisture absorbent may be, for example, zeolite (molecular sieve), alkali metal aluminosilicate (13X molecular sieve), lithium chloride, silica gel, modified silica gel, activated alumina and other solid moisture absorbents. Correspondingly, the moisture-absorbing member may be of a solid structure provided with a solid moisture absorbent. The moisture absorbent may be, for example, a lithium chloride solution, a lithium bromide solution or other liquid moisture absorbent. Correspondingly, the moisture-absorbing member may be a container containing the liquid moisture absorbent.

According to some embodiments, in order to improve a moisture-absorbing effect and achieve sustainable use of the moisture absorbent and cost reduction, the drying module assembly further includes a dehumidifying assembly. The dehumidifying assembly is disposed on a regenerating passage and configured to desorb moisture absorbed by the moisture absorbent. The dehumidifying assembly may be, for example, a heating assembly, an ultrasonic generator, a microwave generator, etc.

A specific structure of the dehumidifying assembly may be determined according to the moisture absorbent. For example, relative to zeolite (molecular sieve), alkali metal aluminosilicate (13X molecular sieve), lithium chloride, modified silica gel, activated alumina and other solid moisture absorbents, the heating assembly may be used to desorb moisture in the moisture absorbent. The heating assembly may include, for example, a heating wire, a PTC heater and other elements having a heating function. Relative to a solid moisture absorbent with high thermal stability such as silica gel, the effect of desorbing moisture using the heating assembly is not very good because it is not sensitive to temperature. Alternatively, an ultrasonic generator, a microwave generator, etc. may be used to desorb moisture in the moisture absorbent by means of high-frequency vibration. Relative to a liquid moisture absorbent, the heating assembly may be used to desorb moisture absorbed by the liquid moisture absorbent. Further, a semi-permeable membrane may be disposed in the container containing the liquid moisture absorbent and only water may pass through the semi-permeable membrane, thereby avoiding the evaporation of the liquid moisture absorbent together with water during the regeneration process, and ensuring the concentration and moisture-absorbing effect of the liquid moisture absorbent.

According to some embodiments, a driving mechanism is configured to move the moisture-absorbing member relative to a moisture-absorbing passage and a regenerating passage. The driving mechanism may be, for example, a drive motor (i.e., an electrical drive), a pneumatic drive, a hydraulic drive, etc.

According to some embodiments, the moisture-absorbing member may be set to different shapes. For example, the moisture-absorbing member may be set as a circular moisture-absorbing rotary plate, a bar-shaped moisture-absorbing strip, containers with openings of different shapes, etc. The specific mode in which the moisture-absorbing member moves relative to the moisture-absorbing passage and the regenerating passage may be determined according to the shape of the moisture-absorbing member.

For example, in the case that the moisture-absorbing member is the circular moisture-absorbing rotary plate, the driving mechanism may drive the moisture-absorbing rotary plate to rotate relative to the moisture-absorbing passage and the regenerating passage, or drive the moisture-absorbing passage and the regenerating passage to rotate relative to the moisture-absorbing rotary plate. In the case that the moisture-absorbing member is the moisture-absorbing strip, the driving mechanism may drive the moisture-absorbing strip to perform a reciprocating linear motion (i.e., translation) relative to the moisture-absorbing passage and the regenerating passage, or drive the moisture-absorbing passage and the regenerating passage to perform a reciprocating linear motion relative to the moisture-absorbing strip. In the case that the moisture-absorbing member is the container, the driving mechanism may drive the container to rotate/rectilinearly move relative to the moisture-absorbing passage and the regenerating passage, or drive the moisture-absorbing passage and the regenerating passage to rotate/rectilinearly move relative to the container. In other embodiments, two or more moisture-absorbing members may be provided, and the driving mechanism is configured to drive different moisture-absorbing members (or drive the moisture-absorbing passage and the regenerating passage), such that different moisture-absorbing members are alternately located on the moisture-absorbing passage and regenerating passage.

Based on the above description, it should be understood that the laundry treating device, the moisture-absorbing member, the dehumidifying assembly, the driving mechanism and other structures in this embodiment of the present disclosure may be implemented in a plurality of ways.

A laundry drying scheme in this embodiment of the present disclosure will be described in detail below by taking the laundry treating device being the integrated washer-dryer, the moisture-absorbing member being the moisture-absorbing rotary plate, the dehumidifying assembly being the heating assembly and the driving mechanism being the drive motor as examples. It should be understood that the laundry drying scheme in this embodiment of the present disclosure is also applicable to a laundry treating device, a moisture-absorbing member, a dehumidifying assembly and a driving mechanism in other embodiments.

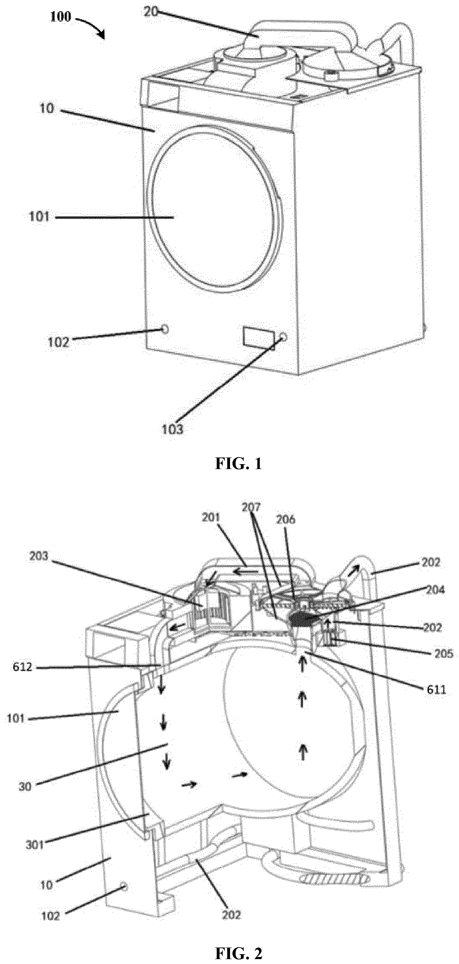

FIGs. 1 to 6 show an integrated washer-dryer 100 according to some embodiments of the present disclosure.

As shown in FIG. 1 and FIG. 2, the integrated washer-dryer 100 includes a water inlet, a water outlet, an inner tub 30, a driving part and a drying module assembly 20. The driving part is in transmission connection with the inner tub 30 so as to drive the inner tub 30 to rotate. The water inlet and the water outlet are respectively communicated with the inner tub 30. The drying module assembly 20 includes a moisture-absorbing passage 201, a regenerating passage 202 and a moisture-absorbing member 206. The moisture-absorbing passage 201 includes a first air inlet 611 and a first air outlet 612 which are respectively communicated with the inner tub 30; a circulating fan 203 is disposed on the moisture-absorbing passage 201 so as to form a circulating airflow inside the inner tub 30 and the moisture-absorbing passage 201; and a regenerating fan 205 is disposed on the regenerating passage 202 so as to form a dehumidifying airflow inside the regenerating passage 202. The moisture-absorbing member 206 is disposed on the moisture-absorbing passage 201 and the regenerating passage 202, such that the circulating airflow and the dehumidifying airflow both flow through the moisture-absorbing member 206; and the moisture-absorbing member 206 is configured to absorb moisture of the circulating airflow inside the moisture-absorbing passage 201 in a rotation process, and discharge the moisture through the dehumidifying airflow of the regenerating passage 202.

In specific applications, the integrated washer-dryer may also include, but is not limited to, a housing 10, a controller and other components. The inner tub 30 and the drying part are located inside the housing 10. The inner tub 30 has an accommodating space for accommodating laundry and other washings. An access port 301 through which the washings may be put into or taken out of the inner tub 30 is defined in a side surface of the housing 10. A door body 101 which may be pivotally connected to the housing 10 is disposed at a position, corresponding to the access port 301, on the housing 10. The opening and closing of the door body 101 may be operated manually by a user or electronically controlled.

A display device is disposed on the lateral part or the upper part of the housing 10 and configured to display information on an operating state of the integrated washer-dryer. The display device may include, but is not limited to, a liquid crystal display screen, a light-emitting diode, etc. The housing 10 is further provided with a plurality of buttons which may be mechanical buttons for a pressing operation or a touch panel for a touch operation. The buttons are configured to input control instructions of a washing machine to the controller, such that the controller controls the corresponding components to execute the control instructions according to the control instructions. The controllers may be implemented using application-specific integrated circuits (ASICs), digital signal processors (DSPs), digital signal processing devices (DSPDs), programmable logic devices (PLDs), field-programmable gate arrays (FPGAs), micro-central-control components, microprocessors, or other electronic components.

In the process of cleaning the washings, the user first puts the washings inside through the access port 301, adds a cleaning solution from a cleaning solution adding port, and then closes the door body 101; a water inlet pipe communicated with a water source is used to fill water into the inner tub 30 through the water inlet according to user's instructions under the control of the controller, and the user then enters washing and spin-drying instructions through the buttons; the controller controls, according to the washing instruction, the driving part to drive the inner tub 30 to rotate to clean the washings, and sewage in the cleaning process may flow to a sewage discharge place through a water drainage pipe to complete the cleaning work; and then, the controller may control the driving part to continue to drive the inner tub 30 to rotate according to the spin-drying instruction, such that most of the remaining water on the washings may be thrown out under the action of a centrifugal force, and discharged through a water outlet, thereby speeding up the drying process of the washings.

After the washings are spin-dried, the controller controls the circulating fan 203 and the regenerating fan 205 to start according to a drying instruction entered by the user, and controls the moisture-absorbing member 206 to rotate. As shown by an arrow in FIG. 2, the circulating fan 203 is used to form the circulating airflow inside the inner tub 30 and the moisture-absorbing passage 201. In the rotation process of the circulating fan 203, an air pressure difference is formed on both sides of the circulating fan 203, thereby forming a flowing airflow. In this way, moist air in the inner tub 30 may enter the moisture-absorbing passage 201 from the first air inlet 611 of the moisture-absorbing passage 201, and then the moisture-absorbed air is discharged into the inner tub 30 through the first air outlet 612 of the moisture-absorbing passage 201, such that air flows circularly inside the inner tub 30 and the moisture-absorbing passage 201 to form the circulating airflow. By means of the circulating airflow, the moist air inside the inner tub 30 continuously enters the moisture-absorbing passage 201 through the first air inlet 611 of the moisture-absorbing passage 201 and is subjected to moisture absorption by the moisture-absorbing member 206. The moisture-absorbed dry air is continuously discharged into the inner tub 30 through the first air outlet 612 of the moisture-absorbing passage 201, such that the washings inside the inner tub 30 continuously exchange heat with the circulating airflow to take away residual moisture in the washings, thereby achieving the purpose of drying the washings.

Meanwhile, a dehumidifying airflow is formed inside the regenerating passage 202 by using the regenerating fan 205. An air inlet end 622 and an air outlet end 621 of the regenerating passage 202 are located outside the inner tub 30. In this way, an air pressure difference is formed on both sides of the regenerating fan 205 in the rotation process of the regenerating fan 205, thereby forming a flowing airflow. Thus, air outside the inner tub 30 enters the regenerating passage 202 through the air inlet end 622, then flows through the moisture-absorbing member 206 to desorb the moisture on the moisture-absorbing member 206, and is then discharged to the environment outside the inner tub 30 through the air outlet end 621. Therefore, the moisture of the moisture-absorbing member 206 may be reduced, such that the moisture-absorbing member 206 may continuously have a high water absorption capacity and an improved water absorption effect.

The moisture-absorbing member 206 keeps rotating during the drying process. In this way, a portion of the moisture-absorbing member 206, which is located in the moisture-absorbing passage 201, absorbs the moisture in the moist air and then rotates into the regenerating passage 202. The moisture in this portion is carried away by the dehumidifying airflow, such that the water content in this portion is reduced. In this way, this portion may also absorb more moisture upon rotating to the moisture-absorbing passage, avoiding the reduction in the absorption effect caused by saturation of moisture in this portion.

Therefore, according to the integrated washer-dryer provided by this embodiment, the moisture of the moist air, which enters the moisture-absorbing passage 201 from the inner tub 30, is absorbed by the moisture-absorbing member 206; and then, the moisture-absorbed air is discharged into the inner tub 30. Such a process is continuously repeated, such that the moisture in the inner tub 30 is gradually reduced to achieve a drying purpose. According to the integrated washer-dryer, there is no need for an evaporator to heat and dehumidify the moist air in the inner tub 30, but the moisture-absorbing member 206 is required to be heated during the desorption process to discharge the moisture therein. In this way, the defect of a poor dehumidification effect of a traditional condensing type or heat pump type dehumidification system in a low temperature environment may be avoided, and thus the integrated washer-dryer is applicable to a wider range of environments.

In the above embodiment, as shown in FIG. 2, FIG. 3 and FIG. 4, a filtering part 204 is further disposed on the moisture-absorbing passage 201, and located at the side of the moisture-absorbing member 206 close to the first air inlet 611, i.e., located upstream of the moisture-absorbing member 206, to filter an airflow entering the moisture-absorbing member 206; and/or, a filtering part 204 is disposed on the regenerating passage.

The filtering part 204 may be of a mesh structure. Of course, the filtering part 204 may also be of a structure of other form that may block debris, which will not be limited in this embodiment.

The filtering part 204 is disposed at the side of the moisture-absorbing member 206 close to the first air inlet 611 so as to filter the moist air entering the moisture-absorbing passage 201, thereby preventing debris in the moist air from contacting the moisture-absorbing member and affecting the working performance of the moisture-absorbing member 206; and meanwhile, preventing wadding in the laundry from being adhered to the moisture-absorbing member 206 and from being ignited to damage the moisture-absorbing member 206 when the moisture-absorbing member is heated for desorption.

Similarly, in order to prevent external dirt from damaging the regenerating fan 205 and prevent an airflow discharged to the outside from polluting the air, a debris filtering part, such as a filter screen, may be disposed upstream of the regenerating fan 205.

Further, a heating member is further disposed on the moisture-absorbing passage 201.

It may be understood that the temperature of dry air entering the inner tub is relatively high in the heat exchange process in the inner tub 30 to accelerate the exchange of the moisture from the washings, thereby shortening the drying time. Therefore, a heating member may be additionally disposed on the moisture-absorbing passage. The heating member may be disposed upstream or downstream of the moisture-absorbing member 206, such that the heated moist air is moisture-absorbed, or the moisture-absorbed dry air is heated and enters the inner tub 30 from the first air outlet 612. In addition, the air heated by the heating member has a higher temperature, and the temperature within the inner tub 30 may also increase, thereby accelerating the evaporation of moisture on the washings, and making the drying efficiency higher and the drying effect better.

In this embodiment, the heating member and the moisture-absorbing member 206 jointly dry the moist air, such that the temperature of the heating member will not be very high, so as to reduce the power consumption of the heating member and save resources. The heating assembly may be a heating wire, a PTC heater or other element having a heating function, of which the PTC heater is composed of a ceramic heating element and an aluminum pipe. The PTC heater has the advantages of small thermal resistance and high heat exchange efficiency, and is an automatic constant-temperature and power-saving electric heater.

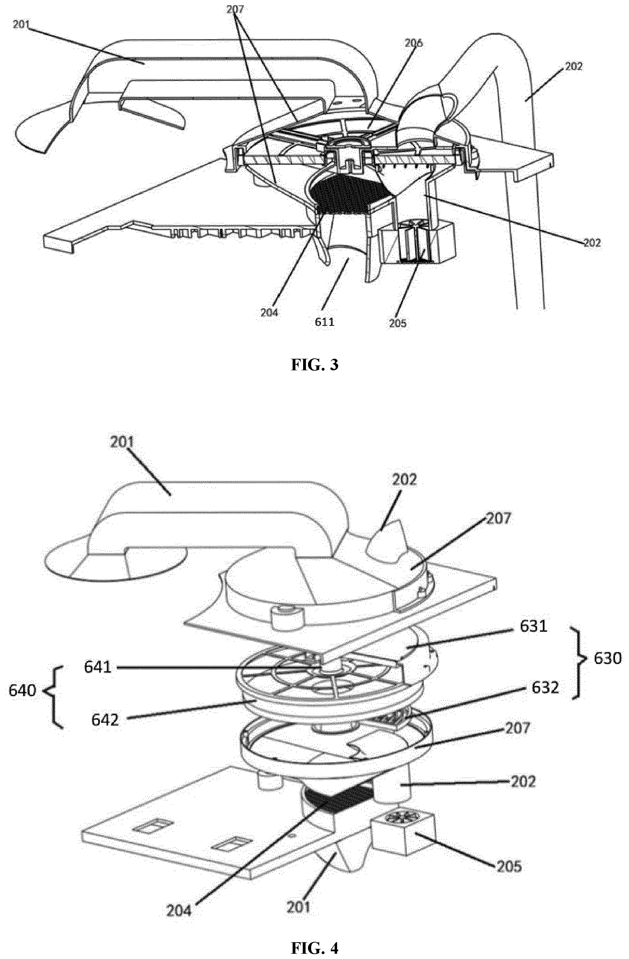

In an example, as shown in FIG. 4, the moisture-absorbing member 206 includes a moisture-absorbing rotary plate 640 and a heating assembly 630. The heating assembly 630 covers a regenerating region of the moisture-absorbing rotary plate 640, and a moisture-absorbing region of the moisture-absorbing rotary plate 640 is located in the moisture-absorbing passage 201. The regenerating region is a region on the moisture-absorbing rotary plate 640 through which the dehumidifying airflow flows, and the moisture-absorbing region is a region on the moisture-absorbing rotary plate 640 through which the circulating airflow flows.

The area of the regenerating region and the area of the moisture-absorbing region may be determined according to radial cross-sectional areas of a moisture-absorbing pipeline and a regenerating pipeline. In some embodiments, the radial cross-sectional area of the moisture-absorbing pipeline is greater than the radial cross-sectional area of the regenerating pipeline. Adaptively, the area of the regenerating region is smaller than the area of the moisture-absorbing region, which may not only increase the amount of airflow of the moisture-absorbing pipeline, but also ensure that most of the moisture-absorbing rotary plate 640 is in the moisture-absorbing region, so as to further improve the moisture absorption efficiency and moisture absorption effect.

In the rotation process of the moisture-absorbing rotary plate 640, various parts of the moisture-absorbing rotary plate 640 rotate from the moisture-absorbing passage 201 to the regenerating passage 202, and then rotate from the regenerating passage 202 to the moisture-absorbing passage 201. That is, various parts of the moisture-absorbing rotary plate 640 rotate from the moisture-absorbing region to the regenerating region, and then rotate from the regenerating region to the moisture-absorbing region. In this way, a portion of the moisture-absorbing rotary plate 640 located in the moisture-absorbing region absorbs moisture of moist air in the moisture-absorbing passage 201, and then rotates to the regenerating region. The heating assembly 630 is used to heat this portion, such that moisture in this portion is fast desorbed, and the moisture is carried by the dehumidifying airflow to the air outlet end 621 of the regenerating passage 202 and discharged to the outside. Therefore, the moisture-absorbing rotary plate 640 may continuously absorb the moisture in the moist air in the moisture-absorbing passage 201 in the rotation process of the moisture-absorbing rotary plate 640 and moisture absorbed by the rotary plate may be continuously discharged, such that the moisture-absorbing rotary plate 640 always has a good water absorption capacity, thereby improving the moisture absorption efficiency and effect.

In an example, as shown in FIG. 4, the heating assembly 630 includes a hood body 631. The hood body 631 covers the regenerating region of the moisture-absorbing rotary plate 640. An opening that is communicated with the regenerating passage 202, is defined in a position, corresponding to the regenerating region, of the hood body 631. A regenerating heating part 632 is disposed inside the hood body 631.

The hood body 631 covers the regenerating region of the moisture-absorbing rotary plate 640, and is located on the side of the moisture-absorbing rotary plate 640 away from the first air inlet 611. In this way, the contact between the dehumidifying airflow and a portion of the moisture-absorbing rotary plate 640 located in the regenerating region will not be blocked, such that a contact area between the moisture-absorbing airflow in the regenerating passage 202 and the moisture-absorbing rotary plate 640 is maximized, and thus more moisture may be carried. The hood body 631 is used to separate the moisture-absorbing region from the regenerating region of the moisture-absorbing rotary plate 640, and fix the regenerating heating part 632. In addition, the hood body 631 and the heating assembly 630 do not rotate accordingly in the rotation process of the moisture-absorbing rotary plate 640. That is, the moisture-absorbing rotary plate 640 rotates relative to the hood body 631 and the heating assembly 630, such that the regenerating heating part 632 may heat a region of the moisture-absorbing rotary plate 640, which rotates to the proximity of the regenerating heating part 632. In order to achieve the purpose of better heating for the desorption of moisture in the regenerating region of the moisture-absorbing rotary plate 640, the regenerating heating part 632 is as close as possible to the moisture-absorbing rotary plate 640.

Under the action of the regenerating fan 205, the airflow enters the regenerating passage 202 from the outside, passes through the regenerating heating part 632 and the regenerating region in sequence, and is then discharged to the outside from an outlet of the regenerating passage 202. In this arrangement, the regenerating heating portion 632 is located upstream of the regenerating region, and the heated airflow exchanges heat with the regenerating region to desorb the moisture therein. Of course, it may be understood that the regenerating heating part 632 may also be located downstream of the regenerating region, or the regenerating heating parts 632 are disposed upstream and downstream of the regenerating region respectively.

In order to prevent external dirt from damaging the regenerating fan 205 and prevent an airflow discharged to the outside from polluting the air, a debris filtering part, such as a filter screen, may be disposed upstream of the regenerating fan 205; and an air filtering part, such as a HEPA filter, is disposed in the regenerating passage 202 downstream of a moisture-absorbing plate.

Similarly, the regenerating heating part may be a heating wire, a PTC heater or other element having a heating function.

In one embodiment, as shown in FIG. 4, the moisture-absorbing rotary plate 640 includes the moisture-absorbing plate 642 and a rotating part which is in transmission connection with the moisture-absorbing plate 642. A housing 207 is disposed outside the moisture-absorbing plate 642 in a hooding manner, and the moisture-absorbing plate 642 may rotate relative to the housing 207 under the driving of the rotating part. The housing 207 is communicated with both the moisture-absorbing pipeline and a regenerating pipeline. To be specific: the housing 207 is provided with a moisture-absorbing pipeline connecting port and a regenerating pipeline connecting port, through which an internal space of the housing 207 is partitioned into a part of the moisture-absorbing passage and a part of the regenerating passage.

The moisture-absorbing plate 642 has a disc-like structure of a certain thickness, which may reduce a space occupied by the moisture-absorbing plate 642, thereby reducing the overall volume of the moisture-absorbing rotary plate 640. In addition, the moisture-absorbing plate 642 is made of materials with a relatively high absorption capacity, such as cotton, fiber, zeolite, lithium chloride, and silica gel. The rotating part includes a rotating shaft 641 and a motor connected to the rotating shaft 641. The rotating shaft 641 is disposed in the middle of the moisture-absorbing plate 642. In this way, the motor drives the rotating shaft 641 to rotate, thereby driving the moisture-absorbing plate 642 connected to the rotating shaft 641 to rotate. The housing 207 may be configured to accommodate the moisture-absorbing plate 642, the rotating shaft 641 and the motor, and the edge of the hood body 631 is fixedly connected to the housing 207, such that the moisture-absorbing plate 642 may rotate, but the hood body 631 does not rotate. In addition, the housing 207 is communicated with the moisture-absorbing passage 201 and the regenerating passage 202, thereby ensuring that the circulating airflow inside the moisture-absorbing passage 201 and the airflow inside the regenerating passage 202 flow smoothly.

In another embodiment, the integrated washer-dryer further includes a housing 207 in which the moisture-absorbing member 206 is disposed. The moisture-absorbing member 206 is disposed to be fixed, and the housing 207 rotates or performs a reciprocating rotation relative to the moisture-absorbing member 206. That is, the moisture-absorbing plate 642 is disposed to be fixed, and the housing 207 is disposed to rotate or perform reciprocating rotation through the rotating shaft 641 relative to the moisture-absorbing plate 642. In this case, the housing 207 may be provided with an inlet and an outlet in the central positions of both ends, the inlet and the outlet being communicated with the moisture-absorbing passage and the regenerating passage. The regenerating heating part 632 is also correspondingly disposed to rotate relative to the moisture-absorbing plate 642. Whether the regenerating heating part 632 rotates synchronously with the housing 207 is not limited herein, that is, the regenerating heating part 632 may rotate synchronously or asynchronously with the housing 207, as long as the regenerating heating part 632 may partition the moisture-absorbing plate 642 into the moisture-absorbing region and the regenerating region in the rotation process. Alternatively, the housing 207 does not complete a complete circular rotation upon reciprocating rotation, for example, it may perform reciprocating rotation in a range of ± 180°. At this time, the moisture-absorbing passage and the regenerating passage, which are communicated with the housing 207, may be provided as flexible hoses to adapt to the reciprocating rotation of the housing. Of course, the positions of the openings which are communicated with the moisture-absorbing passage 201 and the regenerating passage 202 in the housing 207, may also be off-center positions, which may be achieved with the help of common knowledge in the art. This embodiment only gives a variety of possible forms, but does not limit which form it takes.

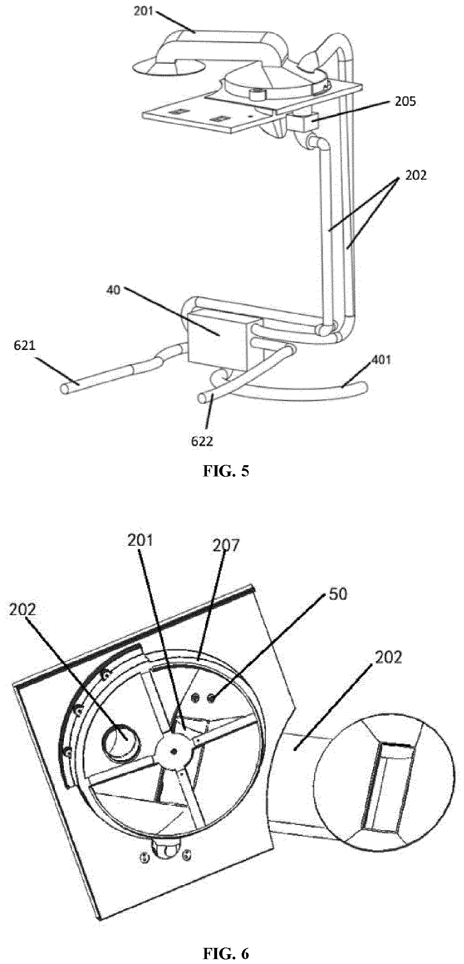

In other embodiments, as shown in FIG. 5, a condensing member 40 is disposed on the regenerating passage 202, and configured to cool the dehumidifying airflow in the regenerating passage 202 to dry the dehumidifying airflow. In a structure without a condensing member, a wet airflow entrained with moisture in the regenerating region is discharged from the regenerating passage to the outside. For the integrated washer-dryer placed in a toilet or laundry, it may cause the humidity of indoor air to increase, especially for areas with more humid and hot weather, which may bring a bad experience. For areas with dry weather, the comfort in the room increases, so the condensing member 40 may be optionally mounted as required.

The condensing member 40 may be an existing condensing device. In specific applications, the air inlet end 622 and the air outlet end 621 of the regenerating passage 202 both pass through the condensing device. In this way, air entering the regenerating passage 202 from the air inlet end 622 is first cooled by the condensing member 40, such that part of the moisture in the air condenses into a liquid, which makes the air drier. The air then passes through the regenerating region of the moisture-absorbing rotary plate 640 to take away the moisture on the moisture-absorbing rotary plate 640. Afterwards, the air passes through the condensing member 40, such that the absorbed moisture is condensed into a liquid, thereby reducing the moisture of the air discharged to the outside, and then avoiding a situation that a large amount of moisture is discharged to the outside with air, such that the external humidity is relatively high and affects the external environment. The condensed moisture may be discharged through a drainage pipe 401 of the condensing member 40, and in order to make the structure more compact and be convenient to operate by the user, the drainage pipe 401 and a sewage discharge pipe for discharging sewage out of the inner tub 30 may share the same pipeline.

In yet some embodiments, as shown in FIG. 6, the integrated washer-dryer further includes a controller. A temperature sensor 50 is further disposed inside the moisture-absorbing passage 201. The controller is electrically connected with the temperature sensor 50 and the heating member respectively. The controller is configured to control the heating member to be turned on or off according a detection temperature of the temperature sensor 50.

A temperature of air inside the moisture-absorbing passage 201 is detected by the temperature sensor 50, and then the controller compares a temperature value detected by the temperature sensor 50 with a preset temperature value. The heating member is controlled to be turned off in response to the detected temperature value being greater than or equal to the preset temperature value; and the heating member is controlled to be turned on in response to the detected temperature value being smaller than the preset temperature value. Therefore, it may be ensured that the circulating airflow has a relatively stable temperature, thereby preventing the washings inside the inner tub 30 from being damaged by a too high temperature of the circulating airflow.

Further, a humidity sensor configured to detect the humidity of the inner tub 30 is further disposed inside the inner tub 30 or an air outlet passage of the inner tub 30.

The humidity sensor may detect the humidity in the inner tub 30 or the air outlet passage of the inner tub 30, and the detected humidity value is displayed on a display device of the housing 10, such that the user may understand the drying situation in the inner tub 30. In addition, the drying time is controlled according to the humidity value.

Further, two or more humidity sensors may be provided, and the temperature sensors 50 are located in different positions of the moisture-absorbing passage 201.

By increasing the number of humidity sensors to detect the humidity in different positions inside the inner tub 30 or the air outlet passage of the inner tub 30, the humidity of the inner tub 30 may be understood comprehensively, avoiding the problem of inaccurate detection caused by the fact that a single humidity sensor detects one position. The number of the humidity sensors may be designed according to the size of the inner tub 30 or the air outlet passage, which will not be strictly limited in this embodiment.

In yet some embodiments, as shown in FIG. 1, the integrated washer-dryer further includes a housing 10. The inner tub 30 and the driving part are located inside the housing 10, and the regenerating passage 202 is at least partially located between the inner tub 30 and the housing 10. The side surface of the housing 10 is provided with a second air outlet 102 and the second air inlet 103. The second air outlet 102 is communicated with the air outlet end 621 of the regenerating passage 202, and the second air inlet 103 is communicated with the air inlet end 622 of the regenerating passage 202. The side of the housing 10 where the second air outlet 102 and the second air inlet 103 are formed is a side of the housing 10 facing the user when the integrated washer-dryer operates. Therefore, the second air outlet 102 and the second air inlet 103 are formed in this side respectively for the user to place the integrated washer-dryer conveniently.

The side of the housing 10 where the second air outlet 102 and the second air inlet 103 are formed is also a side where the door body 101 is disposed. In this way, the second air outlet 102 and the second air inlet 103 may be prevented from being shielded by an external obstruction (such as a wall) in the process of drying the washings by the integrated washer-dryer, so as to ensure that there is enough air entering the regenerating passage 202, and may be discharged from the regenerating passage 202 smoothly.

The regenerating passage 202 is disposed between the inner tub 30 and the housing 10, such that the structure of the integrated washer-dryer is more compact by sufficiently using a space between the inner tub 30 and the housing 10.

It should be noted that although the laundry drying scheme of this embodiment is described in the present description by taking a side-opening door type drum washing machine as an example, it should be understood that the laundry drying scheme of this embodiment of the present disclosure may be applicable to any type of washing machine, including but not limited to: a side-opening door type drum washing machine, a top-opening door type drum washing machine, an impeller washing machine, an agitator washing machine, a small (mini) washing machine, etc.

FIGs. 7 to 43 show an integrated washer-dryer 1000 according to other embodiments of the present disclosure.

FIGs. 7 to 9 show a perspective view, a rear view and a top view of the integrated washer-dryer 1000 respectively according to the embodiments of the present disclosure. FIGs. 10 and 11 show a top view and a perspective view of a drying module assembly 2000 in FIG. 8 and FIG. 9 respectively.

As shown in FIGs. 7 to 9, the integrated washer-dryer 1000 includes a drum 1100 configured to accommodate laundry to be treated (the "treated" here may be a washing treatment or a drying treatment). The drum 1100 includes an inner tub and an outer tub, the inner tub being configured to hold laundry to be treated and rotating under the action of a driving mechanism, while the outer tub being fixed relative to a machine body in a hanging manner. A door body 1110 is disposed at a position, corresponding to the drum 1100, on a housing 1200 of the integrated washer-dryer 1000. The door body 1110 is pivotally connected to the housing 1200. The opening and closing of the door body 1110 may be controlled manually by a user or by means of an electronic controller.

As shown in FIGs. 7 to 9, the integrated washer-dryer 1000 includes a drying module assembly 2000 configured to dry the laundry inside the drum 1100. The drying module assembly 2000 is disposed above the drum 1100.

As shown in FIG. 10 and FIG. 11, in the embodiments of the present disclosure, the drying module assembly 2000 includes a moisture-absorbing passage, a regenerating passage, a circulating fan 2100, a moisture-absorbing member 2200, a driving mechanism 2300 and a regenerating fan 2400.

As shown in FIG. 8, a first air inlet 2901 of the moisture-absorbing passage is communicated with an air outlet pipeline 1300 of the drum 1100. A first air outlet 2902 of the moisture-absorbing passage is communicated with an air inlet pipeline of the drum 1100. For example, as shown in FIG. 11, the first air outlet 2902 is communicated with the air inlet pipeline of the drum 1100 (not shown in FIG. 11) through a connector 1400. The circulating fan 2100 is located inside the moisture-absorbing passage and configured to form a circulating airflow inside the drum 1100 and the moisture-absorbing passage. The regenerating fan 2400 is located inside the regenerating passage and configured to form a dehumidifying airflow inside the regenerating passage.

One part of the moisture-absorbing member 2200 is located on the moisture-absorbing passage, and the other part of the moisture-absorbing member 2200 is located on the regenerating passage, such that the circulating airflow in the moisture-absorbing passage and the dehumidifying airflow in the regenerating passage both flow through the moisture-absorbing member 2200. The driving mechanism 2300 may be, for example, a drive motor, which is configured to move (e.g., rotate) the moisture-absorbing member 2200 relative to the moisture-absorbing passage and the regenerating passage. The moisture-absorbing member 2200 absorbs moisture in the circulating airflow in the rotation process and discharges the absorbed moisture through the dehumidifying airflow.

According to some embodiments, the moisture-absorbing member 2200 may include a moisture-absorbing rotary plate 2201. The moisture-absorbing rotary plate 2201 is provided with a moisture absorbent configured to absorb moisture. The moisture absorbent may be, for example, zeolite (molecular sieve), alkali metal aluminosilicate (13X molecular sieve), lithium chloride, silica gel, modified silica gel, activated alumina, and the like.

The driving mechanism 2300 is configured to drive the moisture-absorbing rotary plate 2201 to rotate relative to the moisture-absorbing passage and the regenerating passage. The circulating airflow and the dehumidifying airflow both flow over the moisture-absorbing rotary plate 2201. A region on the moisture-absorbing rotary plate 2201 through which the circulating airflow flows is a moisture-absorbing region, while a region through which the dehumidifying airflow is a regenerating region.

According to some embodiments, as shown in FIG. 10 and FIG. 11, the drying module assembly 2000 may further include a heating assembly 2500 and a condenser 2600 which are disposed on the regenerating passage. The heating assembly 2500 covers the regenerating region of the moisture-absorbing member 2200 (the moisture-absorbing rotary plate 2201) and configured to heat the regenerating region of the moisture-absorbing member 2200 (the moisture-absorbing rotary plate 2201) to desorb moisture absorbed by the moisture-absorbing member 2200 (the moisture-absorbing rotary plate 2201). The condenser 2600 is configured to condense a dehumidifying airflow flowing from the regenerating region of the moisture-absorbing member 2200 to dry the dehumidifying airflow. The condenser 2600 includes a water inlet 2610 and a water outlet 2620, as shown in FIG. 37.

In some embodiments, the drying module assembly 2000 further includes an upper housing and a lower housing. The upper housing and the lower housing cover and fix various components of the drying module assembly 2000, such that the drying module assembly 2000 forms an integral module.

According to some embodiments, the upper housing and the lower housing of the drying module assembly 2000 may be discrete housings which correspond to respective components of the drying module assembly 2000 respectively, or an integrated housing which corresponds to a plurality of components of the drying module assembly 2000. For example, in the embodiment shown in FIG. 10 and FIG. 11, the lower housing 2700 of the drying module assembly 2000 is an integrated housing. FIG. 12 further shows a structural diagram of the integrated lower housing 2700. As shown in FIG. 12, the lower housing 2700 is provided with a mounting part 2710 for mounting the circulating fan 2100, a mounting part 2720 (i.e., a first mounting part) for mounting the moisture-absorbing member 2200, a mounting part 2730 for mounting the regenerating fan 2400, and a mounting part 2740 for mounting the condenser 2600. The upper housing of the drying module assembly 2000 is discrete housings, including an upper housing 2810 for mounting the circulating fan 2100, an upper housing 2820 for mounting the moisture-absorbing member 2200, an upper housing 2830 for mounting the condenser 2600, etc.

According to some embodiments, as shown in FIGs. 9 to 11, the lower housing 2700 of the drying module assembly 2000 is provided with a plurality of fourth mounting parts 2701, and the upper housing 2820 is provided with a fifth mounting part 2801. The fourth mounting part 2701 and the fifth mounting part 2801 are fixed to the housing 1200 of the integrated washer-dryer 1000 in a lap joint manner, thereby achieving the mounting and fixation of the entire drying module assembly 2000. In this embodiment, there is no direct rigid connection between the drying module assembly 2000 and the drum 1100, so as to avoid the transfer of the vibration of the drum 1100 during the operation process to the drying module assembly 2000 (especially to the moisture-absorbing member 2200), thereby improving the stability and reliability of the drying module assembly 2000.

According to some embodiments, as shown in FIG. 8 and FIG. 11, the first air inlet 2901 of the moisture-absorbing passage of the drying module assembly 2000 may be communicated with the air outlet pipeline 1300 of the drum 1100 through a flexible pipe (e.g., a corrugated hose) 2903. According to some embodiments, a filter (e.g., a filter screen) configured to filter debris and clothes waddings may be disposed inside the air outlet pipeline 1300. In addition, the connector 1400 may also be communicated with the air inlet pipeline of the drum 1100 via a flexible pipe (not shown in FIG. 8, and FIG. 11). Therefore, the transfer of the vibration of the drum 1100 to the drying module assembly 2000 (especially to the moisture-absorbing member 2200) may be avoided, thereby improving the stability and reliability of the drying module assembly 2000.

According to some embodiments, as shown in FIG. 10 and FIG. 11, various components (including the circulating fan 2100, the moisture-absorbing member 2200, the driving mechanism 2300, the regenerating fan 2400, the heating assembly 2500, the condenser 2600 and the like) of the drying module assembly 2000 are disposed horizontally, in which rotating shafts of the rotary components (including the circulating fan 2100, the moisture-absorbing member 2200, the driving mechanism 2300 and the regenerating fan 2400) are approximately parallel, and approximately perpendicular to rotating shafts of the upper housing and the drum 1100 of the integrated washer-dryer 1000. According to these embodiments, the height of the integrated washer-dryer 1000 may be maximally reduced, thereby saving the space.

It should be understood that the drum 1100 is usually of a cylindrical structure with a rotating shaft parallel to the ground, so there is a larger available space laterally above (relative to directly above) the drum 1100. According to some embodiments, some components of the drying module assembly 2000 may be disposed in a space between the laterally upper side of the drum 1100 and the housing 1200, such that an internal space of the integrated washer-dryer 1000 may be sufficiently utilized, making the structure of the integrated washer-dryer 1000 more compact and the volume thereof smaller. For example, in the embodiments shown in FIGs. 9 to 11, the circulating fan 2100, the driving mechanism 2300, the regenerating fan 2400, the condenser 2600 and other components are all disposed laterally above the drum 1100. In this embodiment, the overall height of the integrated washer-dryer 1000 depends on the diameter of the drum 1100 and the thickness of a component (i.e., the moisture-absorbing member 220) located directly above the drum 1100.

According to some embodiments, rotating shafts of two rotary components having the largest diameters of the drying module assembly 2000 may be disposed on both sides of the rotating shaft of the drum 1100 respectively, and both are located in different planes from and perpendicular to the rotating shaft of the drum 1100. Therefore, the internal space of the integrated washer-dryer 1000 may be utilized sufficiently, making the structure of the integrated washer-dryer more compact and the volume thereof smaller. For example, in the embodiments shown in FIGs. 9 to 11, the two rotary components having the largest diameters may be the moisture-absorbing member 2200 and the circulating fan 2100. Rotating shafts of the moisture-absorbing member 2200 and the circulating fan 2100 are disposed on the right side and the left side (viewed from the front view of the integrated washer-dryer 1000) of the drum 1100 respectively, and both are located in different planes from and perpendicular to the rotating shaft of the drum 1100.

FIGs. 13 to 15 show a top view, a bottom view and an exploded view of the circulating fan 2100, respectively. As shown in FIGs. 13 to 15, the circulating fan 2100 includes a motor 2110, an upper housing 2810, a fan impeller 2120 and a sealing gasket 2130.

According to some embodiments, the upper housing 2810 is in a volute shape, which meets fluid design requirements, and may be used as a flow channel to provide a maximum air volume and air speed for the moisture-absorbing passage of the drying module assembly 2000. The upper housing 2810 is provided with a pipeline fixing clamp 2811 configured to fix pipelines and a wire fixing clamp 2812 configured to fix wires (e.g., a power wire, a control wire, etc. of the motor 2110). The motor 2110 and the upper housing 2810 may be fixed by means of screws.

FIG. 16 shows a cooperating mode of the circulating fan 2100 and the integrated lower housing 2700 of the drying module assembly 2000. As shown in FIG. 16, the upper housing 2810 may be fixed to the mounting part 2710 by means of a screw 2904, such that the circulating fan 2100 and the lower housing 2700 are connected fixedly. The sealing gasket 2130 is located at the junction between the upper housing 2810 and the mounting part 2710. According to some embodiments, in order to facilitate mounting the circulating fan 2100 to the lower housing 2700 and improve the air tightness of the circulating fan 2100, a sunken groove (not shown in FIG. 16) in which the sealing gasket 2130 is placed may be formed at the edge of the mounting part 2710 or the edge of the upper housing 2810.

According to some embodiments, an air inlet of the circulating fan 2100 may be the first air inlet 2901 of the moisture-absorbing passage. Correspondingly, the air inlet of the circulating fan 2100 may be communicated with the air outlet pipeline of the inner tub through the flexible pipe 2903. According to some embodiments, as shown in FIG. 17, the flexible pipe 2903 and a pressing plate 2905 may be connected through a positioning pin. The pressing plate 2905 is fixed to the mounting part 2710 of the lower housing 2700 through a bolt 2906, such that the flexible pipe 2903 is connected to the air inlet of the circulating fan 2100, and the other end of the flexible pipe 2903 may also be connected to an air outlet of the air outlet pipeline in the same way.

Under the action of the circulating fan 2100, a circulating airflow may be formed between the moisture-absorbing passage and the inner tub. FIG. 18 shows a flow direction of the circulating airflow in this embodiment of the present disclosure. As shown in FIG. 18, under the action of the circulating fan 2100, the airflow in the inner tub enters the first air inlet 2901 of the moisture-absorbing passage sequentially through the air outlet pipeline (with a filter inside) of the inner tub and the flexible pipe 2903, that is, the airflow enters the air inlet of the circulating fan 2100 (as shown by an arrow A). The airflow flows from the air outlet of the circulating fan 2100 to the lower side of the moisture-absorbing rotary plate 2201 (as shown by an arrow B), passes through the moisture-absorbing rotary plate 2201 to the upper side of the moisture-absorbing rotary plate 2201 (as shown by an arrow C), flows in the upper space of the moisture-absorbing rotary plate 2201 (corresponding to the moisture-absorbing region) (as shown by an arrow D), and enters the inner tub through the first air outlet 2902 of the moisture-absorbing passage and the connector 1400 (as shown by an arrow E).

FIG. 19 and FIG. 20 show an exploded view of the moisture-absorbing member 2200 and a perspective view upon the completion of assembly, respectively. FIG. 21 is a top view of the lower housing 2700.

According to some embodiments, as shown in FIG. 19, the moisture-absorbing member 2200 includes the moisture-absorbing rotary plate 2201, an upper peripheral clamping housing 2202, a lower peripheral clamping housing 2203 and a circumferential shock absorber 2204. The circumferential shock absorber 2204 is disposed on the outer circumference of the moisture-absorbing rotary plate 2201, or the inner circumferential wall of the upper peripheral clamping housing 2202 and/or the lower peripheral clamping housing 2203. The upper peripheral clamping housing 2202 and the lower peripheral clamping housing 2203 clamp and fix the moisture-absorbing rotary plate 2201 and the circumferential shock absorber 2204. The clamping and fixing may be, for example, achieved by means of snaps, screws, adhesives, etc.

The circumferential shock absorber 2204 may be, for example, foam, soft rubber, wool strips and other materials. The circumferential shock absorber 2204 is attached to the outer circumference of the moisture-absorbing rotary plate 2201, or the inner circumferential wall of the upper peripheral clamping housing 2202 and/or the lower peripheral clamping housing 2203, so as to form a buffer between an outer ring of the moisture-absorbing rotary plate 2201 and inner rings of the upper peripheral clamping housing 2202 and the lower peripheral clamping housing 2203, thereby protecting the moisture-absorbing rotary plate 2201 (especially when the moisture-absorbing rotary plate 2201 is implemented as a brittle material such as a molecular sieve) against damage caused by collision with the upper peripheral clamping housing 2202 and the lower peripheral clamping housing 2203 in the rotation process.

According to some embodiments, as shown in FIG. 19 and FIG. 20, a first sealing ring 2205 is disposed at the junction between the upper peripheral clamping housing 2202 and the lower peripheral clamping housing 2203, or on the outer circumference of the respective upper peripheral clamping housing 2202 or on the outer circumference of the respective lower peripheral clamping housing 2203. The first sealing ring 2205 may be, for example, foam, soft rubber, wool strips and other materials. The first sealing ring 2205 may, on the one hand, seal the junction between the upper peripheral clamping housing 2202 and the lower peripheral clamping housing 2203, and on the other hand, form a rotating seal with a housing sealing ring 2724 disposed in the first mounting part 2720 of the lower housing 2700, such that the vast majority of moist airflow ascending from the inner tub may pass through the moisture-absorbing rotary plate 2201 to be moisture-absorbed, without leaking from a gap between the outer circumference of the moisture-absorbing rotary plate 2201 and the inner circumference of the lower housing 2700, thereby ensuring a moisture-absorbing effect.

According to some embodiments, as shown in FIG. 19 and FIG. 20, the moisture-absorbing member 2200 further includes an upper central clamp 2206, a lower central clamp 2207, and a central end surface shock absorber 2208. A first hole 2209 is defined in the center of the moisture-absorbing rotary plate 2201, a second hole 2210 is defined in the center of the upper central clamp 2206, and a third hole 2210 is defined in the center of the lower central clamp 2207. The upper central clamp 2206 and the lower central clamp 2207 pass through the first hole 2209 to clamp and the fix the moisture-absorbing rotary plate 2201. The clamping and fixing, for example, may be achieved by means of snaps, screws, adhesives, etc. The first hole 2209, the second hole 2210 and the third hole 2211 are all fitted over a short shaft 2721 in the center of the first mounting part 2720 of the lower housing 2700, thereby connecting the moisture-absorbing member 2200 and the lower housing 2700 rotatably. The central end surface shock absorber 2208 is fitted over the lower central clamp 2207, and is located between the lower central clamp 2207 and the moisture-absorbing rotary plate 2201, and configured to protect the moisture-absorbing rotary plate 2201 against damage caused by friction with the lower central clamp 2207 in the rotation process.

According to some embodiments, as shown in FIG. 19 and FIG. 20, drive teeth are disposed on the outer circumference of the upper peripheral clamping housing 2202. It may be understood that in some other embodiments, the drive teeth may also be disposed on the outer circumference of the lower peripheral clamping housing 2203. The driving mechanism 2300 may be a drive motor, an output end of which is provided with a gear. The gear of the drive motor is meshed with the drive teeth on the upper peripheral clamping housing 2202, thereby driving the moisture-absorbing member 2200 to rotate. A belt groove may also be formed in the outer circumference of the upper peripheral clamping housing 2202, and the drive motor drives the moisture-absorbing member 2200 to rotate by means of belt drive.

It should be noted that the drive mode of the moisture-absorbing member 2200 is not limited to a peripheral drive mode shown in FIG. 20. In some other embodiments, the moisture-absorbing member 2200 may be driven to rotate in other modes. For example, the output end of the driving mechanism 2300 may also be connected to the upper central clamp 2206 or the lower central clamp 2207, and the moisture-absorbing member 2200 is driven to rotate by driving the upper central clamp 2206 or the lower central clamp 2207, that is, in a central drive mode. Generally, in the central drive mode, the driving mechanism 2300 needs to be disposed in a vertical direction of (above or below) the moisture-absorbing member 2200. In the peripheral drive mode shown in FIG. 20, the driving mechanism 2300 and the moisture-absorbing member 2200 are disposed horizontally. It may be understood that the central drive mode occupies more vertical space than the peripheral drive mode, which increases the height and volume of the integrated washer-dryer. However, the central drive mode allows the driving mechanism 2300 to directly drive the moisture-absorbing member 2200 to rotate, unlike the peripheral drive mode in which a gear or belt needs to be additionally disposed at the output end of the driving mechanism to drive the moisture-absorbing member, thereby simplifying the structure of the driving mechanism 2300 and reducing a moment of a central shaft. Those skilled in the art may choose a suitable drive mode to drive the moisture-absorbing member 2200 to rotate according to actual needs.

According to some embodiments, as shown in FIG. 19 and FIG. 20, an auxiliary rotating ring 2202 is disposed on the outer circumference of the upper peripheral clamping housing 2202. As shown in FIG. 21, the lower housing 2700 is provided with a first mounting part 2720 for mounting the moisture-absorbing member 2200, and a first roller 2722 is disposed on the inner sidewall of the first mounting part 2720. The first roller 2722 may be, for example, disposed on a portion which protrudes outward from the inner sidewall of the first mounting part 2720. A rotating shaft of the first roller 2722 is parallel to the rotating shaft of the moisture-absorbing member 2200.

As the moisture-absorbing member 2200 rotates, the auxiliary rotating ring 2212 is in rolling fit with the first roller 2722, which may ensure the stable rotation of the moisture-absorbing member 2200 and eliminate a sliding friction between the moisture-absorbing member 2200 and the inner ring of the lower housing 2700. The first roller 2722 may be a flexible roller 2722, the diameter of which is elastically variable, that is, when the first roller 2722 is pressed radially, a distance between a pressing point and the rotating shaft of the first roller 2722 is variable. As the moisture-absorbing member 2200 rotates, in the case that the rotating shaft of the moisture-absorbing member 2200 is offset from the short shaft 2721, the auxiliary rotating ring 2212 may press the first roller 2722 to cause its deformation, without any sliding friction under the pressing of the auxiliary rotating ring 2212 and the first roller 2722. The cooperation of the auxiliary rotating ring 2212 and the first roller 2722 may reduce the collision with the inner ring of the lower housing 2700 due to the unstable and uneven rotation of the moisture-absorbing member 2200, and avoid damage to the moisture-absorbing member 2200 (especially the moisture-absorbing rotary plate 2201) due to collision.

It should be noted that, the auxiliary rotating ring 2212 may also be disposed on the outer circumference of the lower peripheral clamping housing 2202, in addition to being disposed on the outer circumference of the outer peripheral clamping housing 2202 as shown in FIG. 19 and FIG. 20. Moreover, the number of the first rollers 2722 will not be limited in the embodiments of the present disclosure. Those skilled in the art may provide five first rollers 2722 as shown in FIG. 21, or a larger or smaller number of first rollers 2722.

According to some embodiments, as shown in FIG. 21, a second roller 2723 is disposed on the bottom surface of the first mounting part 2720. The second roller 2723 may be, for example, disposed on the edge of the bottom surface of the first mounting part 2720. The second roller 2723 may be a rigid roller, the diameter of which is fixed. A rotating shaft of the second roller 2723 is perpendicular to the rotating shaft of the moisture-absorbing member 2200. As the moisture-absorbing member 2200 rotates, the second roller 2723 may be in rolling fit with the lower surface of the lower peripheral clamping housing 2203, so as to support the lower peripheral clamping housing 2203, thereby eliminating a friction between the moisture-absorbing member 2200 and the bottom surface of the lower housing 2700.

It should be noted that the number of the second rollers 2723 will not be limited in the embodiments of the present disclosure. Those skilled in the art may provide four second rollers 2723 as shown in FIG. 21, or a larger or smaller number of second rollers 2723.

FIG. 22 and FIG. 23 show exploded views of the first mounting part 2720 of the lower housing and of an upper housing 2820 respectively, the first mounting part 2720 being configured for mounting the moisture-absorbing member 2200. FIG. 24 shows an exploded view upon the mounting of the first mounting part 2720, the upper housing 2820 and the moisture-absorbing member 2200.

According to some embodiments, as shown in FIGs. 22 to 24, the lower housing 2700 of the drying module assembly 2000 may be an integrated lower housing on which the first mounting part 2720 for mounting the moisture-absorbing member 2200 is disposed. The drying module assembly 2000 further includes a separate upper housing 2820 for mounting the moisture-absorbing member 2200. The upper housing 2820, in addition to including a round second mounting part 2821 for mounting the moisture-absorbing member 2200, further includes a first air outlet 2902 of the moisture-absorbing passage. The moisture-absorbing member 2200 is rotatably connected to the short shaft 2721 of the first mounting part 2720, such that the moisture-absorbing member 2200 is rotatably connected into an approximately cylindrical space formed by the first mounting part 2720 and the second mounting part 2821.

According to some embodiments, as shown in FIGs. 22 to 24, the first mounting part 2720 is provided with a first separator 2725, and the second mounting part 2821 is provided with a second separator 2822. After the lower housing 2700 and the upper housing 2820 are fixedly connected, the second separator 2822 is located directly above the first separator 2725, thereby separating the cylindrical space where the moisture-absorbing member 2200 is located into a moisture-absorbing region 2907 and a regenerating region 2908. That is, the first separator 2725 and the second separator 2822 may separate the moisture-absorbing rotary plate 2201 into the moisture-absorbing region 2907 and the regenerating region 2908. The circulating airflow flows to the moisture-absorbing region 2907 of the moisture-absorbing rotary plate 2201 from the lower side of the moisture-absorbing rotary plate 2201, and the moisture-absorbing region 2907 is configured to absorb moisture in the circulating airflow. The dehumidifying airflow flows to the regenerating region 2908 of the moisture-absorbing rotary plate 2201 from the upper side of the moisture-absorbing rotary plate 2201 and configured to discharge moisture absorbed by the moisture-absorbing rotary plate 2201, thereby achieving regeneration and reuse of the moisture-absorbing rotary plate 2201.

According to some embodiments, as shown in FIG. 22 and FIG. 24, the first mounting part 2720 of the lower housing 2700 is further provided with at least one third separator 2726. The at least one third separator 2726 separates the moisture-absorbing region 2907 into at least two parts, i.e., a first moisture-absorbing region 2907-1 and a second moisture-absorbing region 2907-2, thereby separating the circulating airflow flowing into the moisture-absorbing region 2907. After entering a space between the lower housing 2700 and the moisture-absorbing member 2200 through the circulating fan, the circulating airflow is separated by the third separator 2726 into at least two parts relatively evenly (i.e., the airflow volumes of the two parts are roughly the same), thereby avoiding more circulating airflow, under the action of a centrifugal force, from flowing to the circumference of the moisture-absorbing member 2200, and less airflow near the center of the circle. According to these embodiments, the moisture absorption efficiency of the moisture-absorbing member 2200 may be improved to realize even and stable moisture absorption.

According to some embodiments, as shown in FIG. 22 and FIG. 24, a first sealing member is disposed between the moisture-absorbing member 2200 and the first separator 2725 of the lower housing 2700. The first sealing member is fixed (e.g. by screws, snaps, adhesives, etc.) to the upper end surface of the first separator 2725. The first sealing member may include, for example, a sealing strip 2728 and a metal pressing plate 2727. The sealing strip 2728 may be, for example, foam, soft rubber, wool strips and other materials. The metal pressing plate 2727 may be connected to the sealing strip 2728 by means of a screw or adhesive and fixes the sealing strip 2728 to the first separator 2725.

Similar to the above embodiments, as shown in FIG. 23 and FIG. 24, a second sealing member is disposed between the moisture-absorbing member 2200 and the second separator 2822 of the upper housing 2820. The second sealing member is fixed (e.g. by screws, snaps, adhesives, etc.) to the lower end surface of the second separator 2822, and located directly above the first sealing member 2727 and the sealing strip 2728. The second sealing member may include, for example, a sealing ring 2824 and a metal pressing plate 2823. The sealing ring 2824 may be made of, for example, foam, soft rubber, wool strips and other materials. The metal pressing plate 2823 may be connected to the sealing ring 2824 by means of a screw or adhesive and fixes the sealing ring 2824 to the second separator 2822.

The first sealing member 2727 and the sealing strip 2728 as well as the second sealing member 2823 and the sealing ring 2824 may achieve a dynamic seal between the moisture-absorbing member 2200 and the lower housing 2700. That is, as the moisture-absorbing member 2200 rotates, the moisture-absorbing region 2907 and the regenerating region 2908 are separated and maintain a relative seal. The circulating airflow of the moisture-absorbing region 2907 passes as little as possible through the first separator 2725 and the second separator 2822 to the regenerating region 2908, and the dehumidifying airflow of the regenerating region 2908 also passes as little as possible through the first separator 2725 and the second separator 2822 to the moisture-absorbing region 2907.

According to some embodiments, a spacing between each of the first sealing member and the second sealing member, in particular between the sealing strip 2728 and the sealing ring 2824 and the moisture-absorbing member 2200, may be set in a reasonable small range, such as between 0.2 mm and 5 mm, or 0.6 mm and 0.8 mm, which is relatively easy to achieve. In this way, the moisture-absorbing rotary plate may achieve a better dynamic sealing effect, without contacting the first sealing member and the second sealing member in the rotation process to increase rotational resistance. In the embodiments shown in FIG. 23 and 24, the sealing member is disposed on an end surface, opposite to the moisture-absorbing member 2200, of each of the first separator 2725 and the second separator 2822. In some other embodiments, the sealing member is only disposed on an end surface, opposite to the moisture-absorbing member 2200, of one of the first separator 2725 and the second separator 2822, and the other of the first separator 2725 and the second separator 2822 is directly opposite to the moisture-absorbing member 2200 (that is, no sealing member is disposed) and is spaced apart from the moisture-absorbing member 2200 by a preset distance. The preset distance is usually set in a reasonable small range, such as 0.2-5 mm.

In some other embodiments, neither the first separator 2725 nor the second separator 2822 may be provided with the sealing member. The first separator 2725 and the second separator 2822 both are directly opposite to the moisture-absorbing member 2200 and maintain a relatively small spacing (i.e., preset distance) from the moisture-absorbing member 2200.

In some other embodiments, a first sealing member is disposed on an end surface, opposite to the moisture-absorbing member 2200, of one of the first separator 2725 and the second separator 2822 and is in contact with the moisture-absorbing member 2200 (namely, it interferes with the moisture-absorbing rotary plate 2201 during the rotation of the moisture-absorbing rotary plate 2201). The first sealing member may be, for example, a wool strip. A second sealing member is disposed on an end surface, opposite to the moisture-absorbing member 2200, of the other of the first separator 2725 and the second separator 2822 and is spaced apart from the moisture-absorbing member 2200 by a preset distance (namely, it does not interfere with the moisture-absorbing rotary plate 2201 during the rotation of the moisture-absorbing rotary plate 2201). The second sealing member may be, for example, soft rubber for sealing. The preset distance is usually set in a reasonable small range, such as 0.2-5 mm.

FIG. 25 shows an exemplary fixing mode of the integrated lower housing 2700 and the upper housing 2820 of the moisture-absorbing member 2200. As shown in FIG. 25, a housing sealing ring 2724 is disposed at the junction between the upper mousing 2820 and the first mounting part 2720 of the lower housing 2700. The housing sealing ring 2724 is configured to ensure the air tightness of the space where the moisture-absorbing member 2200 is located. The housing sealing ring 2724 may be, for example, a rubber gasket, a silicone gasket, etc. A groove in which the housing sealing ring 2724 is mounted is defined in the upper housing 2820 or the first mounting part 2720 of the lower housing 2700. The housing sealing ring 2724 is mounted to the groove, and the upper housing 2820 is fastened to the first mounting part 2720 and bolted.

Referring to FIG. 12, the integrated lower housing 2700 of the drying module assembly 2000 is provided with a mounting part 2730 for mounting the regenerating fan 2400. The mounting part 2730 may cooperate with a separate upper housing corresponding to the regenerating fan 2400 to fix the regenerating fan 2400 in the mounting part 2730 of the lower housing 2700. The regenerating fan 2400 may be, for example, an already encapsulated fan module.

Under the action of the regenerating fan 2400, a dehumidifying airflow may be formed in the regenerating passage. FIG. 26 shows a flow direction of the dehumidifying airflow in this embodiment of the present disclosure. As shown in FIG. 26, the dehumidifying airflow enters an air inlet of the regenerating fan 2400 (as shown by an arrow A) under the action of the regenerating fan 2400, passes through the regenerating fan 2400 and enters the heating assembly 2500 via a first connector 2909 (as shown by arrows B and C). The heating assembly 2500 is located above the regenerating region of the moisture-absorbing rotary plate 2201. The dehumidifying airflow flows into the heating assembly 2500, passes through the regenerating region of the moisture-absorbing rotary plate 2201 from top to bottom (as shown by an arrow D), and then flows into the condenser 2600 (as shown by an arrow E). An air outlet in a housing (not shown in FIG. 26) of the condenser 2600 is communicated with an air inlet of the regenerating fan 2400 through a second connector 2910, such that the regenerating passage forms a closed loop. The dehumidifying airflow condensed by the condenser 2600 flows again into the air inlet of the regenerating fan 2400 through the second connector 2910 (as shown by an arrow A), such that the dehumidifying airflow may circularly flow in the regenerating passage. The closed-loop regenerating passage may avoid the interaction between the dehumidifying airflow and the external environment of the integrated washer-dryer, thereby reducing the impact on the external environment (e.g., the impact on the humidity of outside air, etc.).

In some other embodiments, the regenerating passage may also be an open-loop passage. For example, in the embodiments shown in FIG. 1 and FIG. 5, the side surface of the housing 10 of the integrated washer-dryer is provided with a second air outlet 102 and a second air inlet 103. The second air outlet 102 is communicated with an air outlet end 621 of the regenerating passage 202, and the second air inlet 103 is communicated with an air inlet end 622 of the regenerating passage 202. In this embodiment, a condenser may be disposed at at least one of the air outlet end 621 and the air inlet end 622. The condenser disposed at the air outlet end 621 may condense and dry the dehumidifying airflow discharged to the outside, thereby reducing the humidity of the airflow discharged to the outside and avoiding the impact on the external environment. The condenser disposed at the air inlet end 622 may dry external airflow flowing into the regenerating passage, thereby improving the dehumidifying effect of the regenerating region.

According to some embodiments, an electric auxiliary heating assembly may be disposed at the air inlet end 622. The electric auxiliary heating unit is configured to preheat the dehumidifying airflow flowing into the regenerating passage 202 to improve a dehumidifying effect of the regenerating region.

As the moisture-absorbing rotary plate 2201 rotates, various parts of the moisture-absorbing rotary plate 2201 rotate from the moisture-absorbing passage to the regenerating passage, and then from the regenerating passage to the moisture-absorbing passage, such that a portion of the moisture-absorbing rotary plate 2201 located in the moisture-absorbing region absorbs the moisture in the wet circulating airflow in the moisture-absorbing passage and then rotates to the regenerating region. The heating assembly 2500 heats this portion, such that the moisture in this portion is quickly desorbed into the dehumidifying airflow. Consequently, the dehumidifying airflow becomes a high-temperature, water vapor-containing airflow (i.e., high-temperature moisture-containing airflow). The condenser 2600 condenses the high-temperature moisture-containing airflow into a low-temperature dry airflow, and condensate water is discharged from the condenser 2600 through a condensate water outlet. The low-temperature dry airflow treated by the condenser 2600 enters the air inlet (corresponding to the closed-loop regenerating passage) of the regenerating fan 2400 again, or is discharged to the outside (corresponding to the open-loop regenerating passage).

The heating assembly 2500 is disposed above the regenerating region of the moisture-absorbing rotary plate 2201, and covers the regenerating region. FIG. 27 and FIG. 28 show an exploded view and a perspective view of related structures of the heating assembly 2500 and the regenerating fan 2400, respectively. As shown in FIGs. 26 to 28, the regenerating fan 2400 is fixed in an upper regenerating fan housing 2410 and a lower regenerating fan housing 2420. The heating assembly 2500 is communicated with the air outlet of the regenerating fan 2400 via the first connector 2909. A first sealing gasket 2912 is disposed at the junction between the heating assembly 2500 and the first connector 2909. The heating assembly 2500 may be connected to an upper housing for a module assembly corresponding to the moisture-absorbing member through a third connector 2911, e.g., connected to a sector-shaped notch in the upper end surface of the upper housing 2820 shown in FIG. 24. The air inlet of the regenerating fan 2400 is connected to a housing of the condenser 2600 through the second connector 2910 (not shown in FIG. 27 and FIG. 28). A second sealing gasket 2913 is disposed at the junction between the second connector 2910 and the condenser 2600.

FIG. 29 and FIG. 30 show a perspective view and an exploded view of the first connector 2909, respectively; and FIG. 31 and FIG. 32 show a perspective view and an exploded view of the second connector 2910, respectively. As shown in FIGs. 29 to 32, the first connector 2909 may be split into two parts, i.e., an upper part 2914 of the first connector and a lower part 2915 of the first connector. The upper part 2914 of the first connector and the lower part 2915 of the first connector may be machined separately, and then are welded or bolted to obtain the first connector 2909. Similarly, the second connector 2910 may also be split into two parts, i.e., an upper part 2916 of the second connector and a lower part 2917 of the second connector. The upper part 2916 of the second connector and the lower part 2917 of the second connector may be machined separately, and then are welded or bolted to obtain the second connector 2910.

By splitting each of the first connector 2909 and the second connector 2910 into two parts, the machining difficulty of the first connector and the second connector may be reduced and the manufacturability thereof may be ensured. In addition, the shapes of the first connector 2909 and the second connector 2910 are determined based on the structures and arrangement modes of the regenerating fan 2400, the heating assembly 2500, the condenser 2600 and other components in the regenerating passage, so as to cooperate with other components in the regenerating passage, thereby achieving the effects of sealing the regenerating passage and adjusting the flow direction of the dehumidifying airflow.

The first connector 2909 may be of a flexible integrated structure, and an air inlet part and an air outlet part at both ends may extend into the air outlet of the condenser housing and the air inlet housing of the regenerating fan by means of deformation, and form a sealed connection by means of bolting after returning to original shapes.

FIG. 33 shows a schematic diagram of a mounting position of the heating assembly 2500 on the upper housing 2820. As shown in FIG. 33, the heating assembly 2500 is disposed on the upper housing 2820, and a heat shield ring 2918 and a second sealing ring 2919 are disposed between the heating assembly 2500 and the upper housing 2820. The heat shield ring 2918 is made of a heat shield material or heat insulation material. In some embodiments, the heat shield ring 2918 may be made of a metal material. The second sealing ring 2919 may be made of silicone, rubber, foam and other materials.

As shown in FIG. 33, the second sealing ring 2919 covers the heat shield ring 2918, and the second sealing ring 2919 is in direct contact with the upper housing 2820 and the heat shield ring 2918. The regenerating region of the moisture-absorbing rotary plate is located below the heating assembly 2500. By providing the heat shield ring 2918 and the second sealing ring 2919 between the heating assembly 2500 and the upper housing 2820, the moisture-absorbing rotary plate may be spatially separated into the moisture-absorbing region and the regenerating region, such that the dehumidifying airflow may pass smoothly through the moisture-absorbing rotary plate.

It may be understood that, if the heating assembly 2500 is in direct contact with the upper housing 2820 (the upper housing 2820 may be, for example, a plastic material) for a long time, the deformation or damage of the upper housing 2820 may be caused due to relatively high temperature of the heating assembly 2500. A buffer zone for temperature transfer may be formed between the heating assembly 2500 and the upper housing 2820 by disposing the heat shield ring 2918 and the second sealing ring 2919, avoiding the deformation or damage of the upper housing 2820 due to high temperature.

FIGs. 34 to 36 show a perspective view of the heating assembly 2500, a schematic diagram of a mesh plate 2550 and a bottom view of the heating assembly 2500, respectively. As shown in FIGs. 34 to 36, the heating assembly 2500 includes a sector-shaped housing 2510, and a mesh plate 2520 and a heating pipe 2530 which are disposed in the sector-shaped housing 2510. The heating pipe 2530 is disposed below the mesh plate 2520, and the mesh plate 2520 is provided with a plurality of air holes 2521.

An air inlet 2540 is defined in the circumferential side or radius side of the sector-shaped housing 2510. The dehumidifying airflow flowing out of the first connector 2909 (see FIGs. 26 to 28) flows from the air inlet 2540 into a space above the mesh plate 2520 in the sector-shaped housing 2510, then flows through meshes 2521 in the mesh plate 2520, is heated by the heating pipe 2530, and flows down to the regenerating region on the moisture-absorbing rotary plate. The high-temperature dehumidifying airflow heated by the heating pipe 2530 may desorb the moisture in the regenerating region.

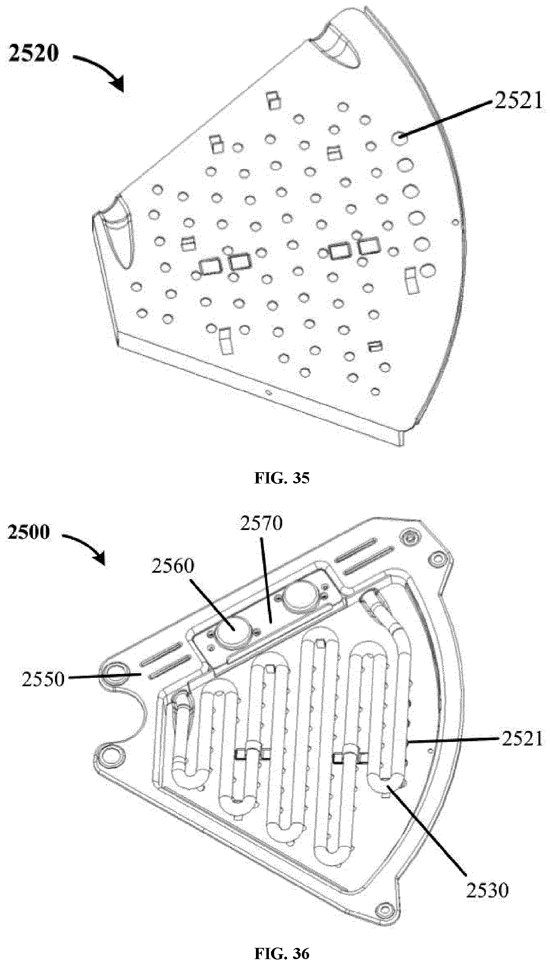

According to some embodiments, the diameters of the plurality of air holes 2521 in the mesh plate 2520 may not be identical. The diameters of the plurality of air holes 2521 may be reduced sequentially along the flow direction of the dehumidifying airflow in the heating assembly 2500, such that the air volume may be adjusted. Thus, the dehumidifying airflow flows evenly through the mesh plate 2520, and hence the dehumidifying airflow may be heated evenly by the heating pipe 2530. For example, as shown in FIG. 34 and FIG. 35, a flow direction of the dehumidifying airflow inside the sector-shaped housing 2510 starts from the circumference to the center of the circle in the case that the air inlet 2540 is defined in the circumferential side of the fan-shaped housing 2510. Correspondingly, the diameters of the plurality of air holes 2521 in the mesh plate 2520 decrease along a direction from the circumference of the sector-shaped housing to the center of the circle (as indicated by arrows in FIG. 35), thereby adjusting the air volume. Therefore, the dehumidifying airflow may be heated evenly by the heating pipe 2530.

In some other embodiments (not shown in FIGs. 34 to 36), the air inlet 2540 may also be formed in the radius side of the sector-shaped housing 2510. In this case, the dehumidifying airflow flows in a direction approximately perpendicular to the radius inside the sector-shaped housing 2510 (i.e., a circumferential direction), in other words, along a direction from the radius side where the air inlet is located to the other radius side of the sector-shaped housing 2510. Correspondingly, the diameters of the plurality of air holes 2521 in the mesh plate 2520 decrease along the direction from the radius side where the air inlet is located to another radius side. Therefore, the volume of air flowing through the mesh plate 2520 may be adjusted, such that the dehumidifying airflow may be heated evenly by the heating pipe 2530. Further, the heated high-temperature dehumidifying airflow evenly dehumidifies the regenerating region of the moisture-absorbing rotary plate, thereby improving the dehumidifying effect.

According to some embodiments, as shown in FIG. 36, the heating pipe 2530 is not disposed directly below the air holes 2521, but is offset towards a direction of a center of the sector-shaped housing relative to the air holes 2521. Due to a certain offset of the position of the heating pipe 2530 relative to the air holes 2521, the heating pipe 2530 will not form a large resistance to the dehumidifying airflow flowing through the air holes 2521. Further, the dehumidifying airflow has a velocity along a direction from the circumference of the sector-shaped housing to the center of the circle (as indicated by arrows in FIG. 35) when the dehumidifying airflow enters the air inlet 2540 and flows through the air holes 2521. The heating pipe 2530 is disposed at a position offset towards the direction of the center of the sector-shaped housing relative to the air holes 2521, the dehumidifying airflow flowing through the air holes 2521 may be directly opposite to the heating pipe 2530, thereby improving the heating efficiency of the heating pipe 2530 to the dehumidifying airflow.

According to some embodiments, as shown in FIG. 34 and FIG. 36, the lower wall of the sector-shaped housing 2510 extends outward to form a third mounting part 2550. It may be understood that the third mounting part may also be disposed at the other position, such as on a sidewall of the sector-shaped housing 2510. The heating assembly 2500 further includes a temperature sensor 2560. The temperature sensor 2560 is disposed on the third mounting part 2550.

The temperature sensor 2560 is configured to detect the temperature of the heating assembly 2500 so as to control the heating pipe 2530 to be turned on and off. According to some embodiments, the temperature sensor 2560 is coated with a heat-conducting sheet 2570. That is, the temperature sensor 2560 is coated with the heat-conducting sheet 2570 and then disposed on the third mounting part 2550. It may be understood that the temperature in the heating assembly 2500 is not stable since the heated dehumidifying airflow may form turbulence in the heating assembly 2500. If the temperature sensor 2560 is directly used to detect the temperature of the airflow in the heating assembly 2500, a temperature value detected by the temperature sensor 2560 will be fluctuated and unstable, which is not conducive to effective control of the heating pipe 2530. By disposing the temperature sensor 2560 in the heat-conducting sheet 2570, the temperature in the heating assembly 2500 is first conducted to the heat-conducting sheet 2570 by means of heat conduction, and the temperature sensor 2560 detects the temperature of the heat-conducting sheet 2570. The temperature of the heat-conducting sheet 2570 is more stable than the temperature of the airflow. Therefore, compared with the direct detection of the airflow temperature by the temperature sensor 2560, the detection of the temperature value of the heat-conducting sheet 2570 by the temperature sensor 2560 may improve the stability and accuracy of the temperature detection. Thus, the heating pipe 2530 may be effectively controlled.

As described above, the heating assembly 2500 heats the dehumidifying airflow to obtain a high-temperature airflow. This high-temperature airflow may desorb the moisture in the regenerating region of the moisture-absorbing rotary plate to obtain a high-temperature moisture-containing airflow. The heated high-temperature moist airflow continues to flow into the condenser 2600 to condense into a low-temperature dry airflow, and the condensate water is discharged out of the condenser 2600 through the condensate water outlet. The low-temperature dry airflow treated by the condenser 2600 enters the air inlet (corresponding to the closed-loop regenerating passage) of the regenerating fan 2400 again, or discharged to the outside (corresponding to the open-loop regenerating passage).

FIG. 37 shows a schematic diagram of a fixing mode of the condenser 2600 and the lower housing 2700. As shown in FIG. 37, the upper housing 2830 of the condenser matches the mounting part 2740 (i.e., the lower housing of the condenser) for mounting the condenser in the lower housing 2700. The upper housing 2830 of the condenser covers the condenser 2600, and presses a sealing strip 2920 around the condenser 2600 downward, to be sealed and fixed with the mounting part 2740. The upper housing 2830 of the condenser and the mounting part 2740 form a complete housing of the condenser 2600, that is, a condenser housing. An air outlet 2631 is defined in the condenser housing, and connected to the air inlet of the regenerating fan 2400 through the second connector 2910 (see FIGs. 26 to 28).

FIG. 38 shows a sectional view of the condenser housing 2630. As shown in FIG. 38, a high-temperature and high-humidity dehumidifying airflow flowing through the regenerating region 2908 enters the condenser housing 2630 (as shown by an arrow A), undergoes a drying treatment (as shown by an arrow B) by the condenser 2600 (not shown in FIG. 38), and flows to the second connector 2910 (as shown by an arrow C) from the air outlet 2631.

According to some embodiments, as shown in FIG. 38, a baffle 2632 is disposed at a position, close to the air outlet 2631, on the bottom surface of the condenser housing 2630. The baffle 2632 may improve the condensation effect of the condenser 2600, such that the dehumidifying airflow is fully dried by the condenser 2600. For example, the baffle 2632 may avoid the following situation: the dehumidifying airflow into the condenser housing 2630 flows out of a gap between the condenser 2600 and the bottom surface of the condenser housing 2630 directly, without flowing through the condenser 2600, resulting in the failure of condensing and drying this part of the airflow.

As shown in FIG. 37, a condensate water pipe 2640 configured to circulate condensate water is disposed inside the condenser 2600. The condensate water pipe 2640 further includes a water inlet 2610 and a water outlet 2620. The direction shown by an arrow A in FIG. 37 is a flow direction of the dehumidifying airflow in the condenser 2600.

According to some embodiments, a sensor configured to detect a condition of the condensate water, such as a temperature sensor or a flow sensor, may be disposed inside the condensate water pipe 2640, or an inductive sensor is disposed outside the condensate water pipe to detect whether the condensate water flows through the condensate water pipe 2640. The water flow in the condensate water pipe 2640 may be adjusted or warned based on the condition data detected by the sensor, so as to ensure the normal operation of the condenser 2600 and improve the condensation effect. For example, if the temperature sensor detects that the temperature of the condensate water is too high, the current condensation effect may be relatively poor. Therefore, a flow rate of the condensate water may increase accordingly, thereby reducing the water temperature of the condensate water and improving the condensation effect. For example again, if the flow sensor detects that the flow rate of condensate water is too small, the condensate water pipe 2640 may have a risk of leakage, and a warning message may be issued to remind the user to inspect or repair the condensate water pipe 2640. Of course, a temperature sensor may also be disposed at the air inlet and/or air outlet of the condenser housing, and whether the condenser is operating normally is determined according to a detected temperature value or a detected temperature difference or a temperature difference between the air inlet and the air outlet.

According to some embodiments, as shown in FIG. 37, the condensate water pipe 2640 may be a serpentine pipe. In the example of FIG. 37, the condensate water pipe 2640 is disposed circuitously in the condenser 2600, such that a contact area between the dehumidifying airflow and the condensate water pipe 2640 increases, thereby fully condensing the dehumidifying airflow. As shown in FIG. 37, the condenser 2600 includes a first side and a second side opposite each other in the flow direction of the dehumidifying airflow (see an arrow A), wherein the first side is located downstream of the second side. In one example not shown, the water inlet 2610 and the water outlet 2620 of the condensate water pipe 2640 both are located on the sidewall of the condenser 2600, this sidewall is connected to the first side and the second side of the condenser 2600, and the water inlet 2610 and the water outlet 2620 are closer to the first side than the second side. In such an example, the condensate water pipe 2640 extends from the water inlet 2610 along a first zig-zag path toward the second side of the condenser 2600 to a position away from the first side, and then extends from this position along a second zig-zag path toward the first side to the water outlet 2620, wherein the first zig-zag path has a length greater than that of the second zig-zag path, for example, twice the length of the second zig-zag path. It may be understood that such an arrangement may be advantageous, since the temperature of the condensate water gradually increases from the first side of the condenser 2600 to the second side of the condenser 2600 due to the heat release of the dehumidifying airflow. In turn, the temperature of the dehumidifying airflow gradually decreases from the second side of the condenser 2600 to the first side of the condenser 2600 due to the heat absorption of condensate water. Therefore, the dehumidifying airflow and the condensate water maintain a certain temperature difference during the entire condensation process, thereby improving the condensation effect.

In the above embodiment, the condenser 2600 is a water-cooled condenser, that is, the flowing condensate water is used as a cooling medium to take away heat released as the dehumidifying airflow condenses. In some other embodiments, the condenser 2600 may also be an air condenser (with air as a cooling medium), an evaporative condenser (with water and air as a cooling medium), and the like.

As shown in FIG. 8 and FIG. 11, a first air inlet 2901 of the moisture-absorbing passage is communicated with the air outlet pipeline 1300 of the drum 1100. Under the action of the circulating fan 2100, the moist air in the drum 1100 is introduced into the regenerating region of the moisture-absorbing member 2200 (the moisture-absorbing rotary plate 2201) for dehumidification.

According to some embodiments, a first filter is disposed upstream of the moisture-absorbing member 2200 in the moisture-absorbing passage. The first filter may be, for example, disposed in the air outlet pipeline 1300 of the drum 1100, or in the first air inlet 2901 of the moisture-absorbing passage. For example, the first filter may be a filter screen, which may intercept and filter clothes waddings in the moist air of the drum 1100, so as to avoid the dehumidification effect from being affected by the blockage of the moisture-absorbing rotary plate 2201 because the waddings from entering the moisture-absorbing rotary plate 2201. Further, the first filter may also avoid the following situation: the waddings are adhered to the moisture-absorbing region of the moisture-absorbing rotary plate 2201, then carried into the regenerating region with the rotation of the moisture-absorbing rotary plate 2201, and ignited by the heating assembly 2500.

According to some embodiments, in the case that the regenerating passage is an open-loop passage, a second filter may be disposed upstream of the regenerating fan in the regenerating passage, and a third filter may be disposed downstream of the moisture-absorbing member. The second filter may be, for example, a filter screen, which is configured to prevent pollutants in the external environment from entering the regenerating passage and causing a damage to the regenerating fan. The third filter is an air filter, such as a HEPA filter, configured to prevent the airflow discharged to the external environment from polluting the air.

According to some embodiments, a cleaning assembly configured to automatically cleaning the filters (e.g., the first filter, the second filter, and the third filter above) is also disposed in the integrated washer-dryer. The cleaning assembly may be, for example, a spraying mechanism configured to spray the filter, a vibration mechanism configured to vibrate the filter, an air blowing mechanism configured to blow air to the filter, a scraping mechanism configured to scrape the filter, and the like. Hereinafter, an automatic filter cleaning scheme in an embodiment of the present disclosure will be described by taking the cleaning assembly being a spraying mechanism as an example.

According to some embodiments, the spraying mechanism may be disposed downstream of the filter, wherein a flow direction of a liquid sprayed by the spraying mechanism is opposite to a direction of airflow flowing through the filter. In this embodiment, the flow direction of the liquid sprayed by the spraying mechanism may be completely opposite to the direction of the airflow flowing through the corresponding filter (an angle between the two directions is 180 degrees), or may be approximately opposite to the direction of the airflow flowing through the corresponding filter (an angle between the two directions is an obtuse angle). FIG. 39 shows a schematic diagram of a filter 1500 and a spraying mechanism 1600 configured to clean the filter 1500 automatically according to an embodiment of the present disclosure. A direction shown by an arrow A in FIG. 39 is a direction of airflow flowing through the filter 1500, and a direction shown by an arrow B is a flow direction of the liquid sprayed by the spraying mechanism 1600.

The filter 1500 may be, for example, a filter screen, which may be disposed obliquely inside the corresponding passage (e.g., upstream of the air outlet pipeline 1300 of the drum 1100, the first air inlet 2901 of the moisture-absorbing passage and the regenerating fan in the regenerating passage, or downstream of the moisture-absorbing member in the regenerating passage, etc., not shown in FIG. 39). The filter 1500 (i.e., filter screen 1500) is disposed obliquely in the corresponding passages. This, in the first aspect, may increase the area of the filter screen, and avoid an effect on the airflow passing efficiency due to blockage in the case of small filter area ; in the second aspect, will not affect the subsequent airflow passing efficiency in the process of cleaning the filter 1500 by the spraying mechanism 1600 even if thorough cleaning is not achieved; and in the third aspect, may effectively prevent, due to a small inclination angle of the filter screen 1500, debris such as waddings from being embedded in the filter screen and not easily washed off by the spraying mechanism 1600.

According to some embodiments, the integrated washer-dryer may include a water inlet connected to a tap water pipe. The water flowing into the integrated washer-dryer from the water inlet is divided into three paths. The first path is connected to the inner tub and configured to clean the laundry in the inner tub; the second path is connected to the condenser and used as condensate water; and the third path is connected to the spraying mechanism 1600 for spray cleaning of the filter 1500. According to some embodiments, as shown in FIG. 39, the spraying mechanism 1600 includes a water outlet pipe 1610 and a nozzle 1620. One end of the nozzle 1620 is connected to the water outlet pipe 1610, the other end of the nozzle 1620 is flat and covers one end of the filter screen 1500 close to the water outlet pipe 1610. FIG. 40 further shows a detailed drawing of the water outlet pipe 1610 and the nozzle 1620. As shown in FIG. 40, the nozzle 1620 includes a conversion part 1621 for connection with the water outlet pipe 1610 and a duckbill extension part 1622. In this embodiment, the nozzle 1620 is configured to connect the water outlet pipe 1610 and the filter screen 1500, and slowly becomes flat from the water outlet pipe 1610 to the filter screen 1500, such that the water flow ejected from the water outlet pipe 1610 may cover the entire width of the filter screen 1500, thereby effectively cleaning the filter screen.

It should be noted that a specific position relationship between the filter screen 1500 and the nozzle 1620 is not limited in the embodiments of the present disclosure, as long as the water flow ejected by the nozzle 1620 may fully cover the filter screen 1500. The filter screen 1500 may be, for example, disposed obliquely or horizontally inside the corresponding passage (e.g., upstream of the air outlet pipeline of the inner tub, the first air inlet of the moisture-absorbing passage, the regenerating fan in the regenerating passage, etc.). The nozzle 1620 may be disposed to directly face the filter screen 1500, or form an inclination angle with the filter screen 1500. The nozzle 1620 may be in contact with the filter screen 1500, or has a certain gap with the filter screen 1500.

According to some embodiments, in addition to the condenser 2600 disposed on the regenerating passage as described above, a condenser may also be disposed between the air outlet of the inner tub of the integrated washer-dryer and the moisture-absorbing member 2200. According to this embodiment, a moist hot airflow flowing from the inner tub may first be condensed once to reduce its water content, and then subjected to moisture-absorbing treatment by the moisture-absorbing rotary plate to improve the moisture absorption efficiency.

According to some embodiments, the condenser disposed between the air outlet of the inner tub and the moisture-absorbing member 2200 may match the first filter (filter screen) and a cleaning assembly thereof, which are disposed in the air outlet pipeline of the inner tub. FIG. 41 shows a schematic diagram of a condenser 2921, a filter screen 2922 and a cleaning assembly 2923 thereof in the air outlet pipeline of the inner tub.

According to some embodiments, as shown in FIG. 41, the filter screen 2922 is disposed obliquely inside the air outlet pipeline 1300 of the inner tub. The cleaning assembly 2923 may be, for example, a first water inlet pipe, which is configured to spray water to the filter screen 2922 to clean a filter surface of the filter screen. The condenser 2921 may be, for example, a second water inlet pipe, which is configured to slowly spray water to an outer wall 1302 of the air outlet pipeline 1300 of the inner tub to keep the outer wall 1302 continuously at a low temperature, thereby condensing and drying the moist hot airflow flowing through the air outlet pipeline 1300. According to some embodiments, in order to ensure that the condensate water sprayed from the second water inlet pipe 2921 will not spill, an outer pipe may be fitted over the air outlet pipeline 1300, such that a water flow space is formed between the outer wall 1302 of the air outlet pipeline 1300 and an inner wall of the outer pipe fitted over the air outlet pipeline, to guide the condensate water into the inner tub, an outer tub, or the water outlet pipeline of the integrated washer-dryer.

It should be noted that the drying module assembly 2000 described above is only an exemplary embodiment of the drying module assembly of the present disclosure. Respective technical features of the drying module assembly 2000 may be replaced with other technical features, thereby forming a drying module assembly of other embodiments of the present disclosure.

It should be noted that a mounting mode of the drying module assembly is not limited in the present disclosure. In the embodiments described above, the drying module assembly 2000 includes an integrated lower shell 2700 and discrete upper housings, such as an upper housing 2810 for the circulating fan, an upper housing 2820 for the moisture-absorbing member, an upper housing 2830 for the condenser, etc. The drying module assembly 2000 is fixed to the housing 1200 of the integrated washer-dryer in a lap joint manner through the fourth mounting part 2701 on the lower housing 2700. In addition, flexible pipes are disposed at the junction between the drying module assembly 2000 and the water outlet pipeline of the drum 1100 and the junction between the drying module assembly 2000 and the air inlet pipeline of the drum 1100. Therefore, damage to the drying module assembly 2000 caused by the transfer of the vibration of the drum 1100 to the drying module assembly 2000 may be avoided.

In some other embodiments, the lower housing and the upper housing of the drying module assembly may both be discrete. That is, the drying module assembly may be assembled from various components such as a circulating fan housing, a moisture-absorbing member housing, a regenerating fan housing, a condenser housing, and the like. According to this embodiment, the respective components of the drying module assembly may be modularized, facilitating the repair and replacement of individual components, thereby facilitating the maintenance of the entire drying module assembly.

In the above embodiments, the respective components of the drying module assembly may be fixedly connected to the outer tub of the drum. Therefore, the space may be saved to reduce the height of the integrated washer-dryer.

In some other embodiments, since the moisture-absorbing member (especially the moisture-absorbing rotary plate) is more fragile and more affected by vibration than other components of the drying module assembly and other components are less affected by vibration, the moisture-absorbing member housing may be fixedly connected to the housing of the integrated washer-dryer, and other components may be fixedly connected to the outer tub of the inner tub. This reduces the cost of the lower housing of the integrally molded drying module assembly while avoiding damage to the moisture-absorbing member (especially the moisture-absorbing rotary plate) caused by vibration. In order to further reduce the impact of vibration, in this embodiment, pipelines between the moisture-absorbing member and all other components that may vibrate are flexible pipes for transitional connection to achieve vibration isolation.

It should be noted that a position relationship between the drum 1100 and the drying module assembly 2000 is not limited in the present disclosure. In addition to disposing the drying module assembly 2000 above the drum 1100 as described above, the drying module assembly 2000 may also be disposed at the rear of the drum 1100 (as shown in FIG. 42), below the drum 1100 (as shown in FIG. 43), and the like.

It should be noted that a position of the air outlet pipeline of the inner tub is not limited in the present disclosure. In addition to disposing the air outlet pipeline 1300 of the inner tub in the left rear of the drum 1100 as described above (as shown in FIG. 8), the air outlet pipeline 1300 may also be disposed in the left front, the right rear, the right front, etc. of the drum 1100. It may be understood that, upon the adjustment of the position of the air outlet pipeline 1300, the positions of other components of the drying module assembly (such as the circulating fan and the moisture-absorbing member) also need to be adjusted accordingly.

According to some embodiments, in addition to cleaning the filter automatically by using the cleaning assembly as described above, the filter may also be manually cleaned. According to some embodiments, the air outlet pipeline 1300 may extend from the left rear of the inner tub to the left front of the inner tub. A filter screen box on which the filter screen is mounted is disposed at a position in the air outlet pipeline 1300 near a front panel or a side panel of the integrated washer-dryer, such that the user may easily remove the filter screen manually. It may be understood that since the filter screen needs to be removed manually, the air outlet pipeline 1300 will actually be cut off by the filter screen box. Therefore, in order to ensure the air tightness and integrity of the air outlet pipeline 1300, it is necessary to provide a sealing member in the position of the filter screen box.

According to some embodiments, in addition to the moisture-absorbing region and the regenerating region described above, a cooling region may also be disposed on the moisture-absorbing rotary plate. That is, the moisture-absorbing rotary plate is divided into three sector-shaped regions, i.e., the moisture-absorbing region, the regenerating region and the cooling region. The cooling region is located downstream of the regenerating region and upstream of the moisture-absorbing region along the rotation direction of the moisture-absorbing rotary plate. After a certain part of the moisture-absorbing rotary plate is heated by the regenerating region, it rotates to the cooling region for cooling, and then rotates to the moisture-absorbing region to absorb moisture of moist hot airflow from the inner tub, which may improve the moisture absorption effect and avoid the adverse effect on the moisture absorption effect due to too high temperature of the moisture-absorbing rotary plate.

According to some embodiments, a cooling passage corresponding to the cooling region described above may be provided. The cooling passage is configured to introduce the airflow into the cooling region to cool the portion of the moisture-absorbing rotary plate that is located within the cooling region. In some embodiments, the cooling passage may be different from the moisture-absorbing passage and the regenerating passage, and an airflow is generated in the cooling passage by disposing a separate fan in the cooling passage. In some other embodiments, the cooling passage may also be reused as part of the regenerating passage, and the airflow in the cooling passage is generated by the regenerating fan. For example, the air outlet of the regenerating fan may be connected to both the regenerating passage and the cooling passage, such that the airflow is generated in the regenerating passage and the cooling passage. After being heated by the heating assembly, the airflow (i.e., the dehumidifying airflow) in the regenerating passage dehumidifies the portion of the moisture-absorbing rotary plate located in the regenerating region; and the airflow in the cooling passage does not need to be heated, but directly flows through the cooling region to cool the portion of the moisture-absorbing rotary plate located in the cooling region.

According to some embodiments, in addition to the round moisture-absorbing rotary plate described above, the moisture-absorbing member may also be a bar-shaped moisture-absorbing strip. Correspondingly, the driving mechanism may drive the moisture-absorbing strip to perform a reciprocating linear motion (i.e., translation) relative to the moisture-absorbing passage and the regenerating passage, or drive the moisture-absorbing passage and the regenerating passage to perform a linear motion relative to the moisture-absorbing strip. A region on the moisture-absorbing strip, which is aligned with the moisture-absorbing passage, is configured to absorb the moisture from the moist circulating airflow; and a region on the moisture-absorbing strip, which is aligned with the regenerating passage, is used for dehumidification.

According to some embodiments, the moisture-absorbing member may be a moisture-absorbing plane. A plurality of moisture-absorbing passages and a plurality of regenerating passages may be disposed, respectively. The plurality of moisture-absorbing passages and the plurality of regenerating passages are alternately arranged horizontally and pass vertically through the moisture-absorbing plane. For example, two moisture-absorbing passages and two regenerating passages may be provided, and the order of the four passages in a horizontal direction from left to right is the moisture-absorbing passage - the regenerating passage - the moisture-absorbing passage - the regenerating passage.

According to some embodiments, the driving mechanism may drive the moisture-absorbing plane to reciprocate in a horizontal direction in a stepwise manner. That is, each time the driving mechanism drives the moisture-absorbing plane to move a distance in the horizontal direction to reach a designated position, and then drives the moisture-absorbing plane to move to the next position after the moisture-absorbing plane stays at the designated position for a period of time. In the case that the moisture-absorbing plane is located in the designated position, a first region on the moisture-absorbing plane, which is aligned with the moisture-absorbing passage, is configured to absorb the moisture from the moist circulating airflow; and a second region on the moisture-absorbing plane, which is aligned with the regenerating passage, is used for dehumidification. After the moisture-absorbing plane is moved to the next position, the first region that is originally aligned with the moisture-absorbing passage is now aligned with the regenerating passage for dehumidification; and the second region, which is originally aligned with the regenerating passage, is now aligned with the moisture-absorbing passage for moisture absorption.

According to some other embodiments, the driving mechanism may also drive the moisture-absorbing plane to reciprocate in a horizontal direction in a continuous motion manner. In the process that the moisture-absorbing plane moves in the horizontal direction, the first region on the moisture-absorbing plane, which is aligned with the moisture-absorbing passage, is configured to absorb the moisture from the moist circulating airflow; and the second region on the moisture-absorbing plane, which is aligned with the regenerating passage, is used for dehumidification. Dehumidification is carried out when the first region is moved to be aligned with the regenerating passage; and moisture absorption is performed when the second region is moved to be aligned with the moisture-absorbing passage.

According to the above embodiments, the moisture-absorbing plane reciprocates in the horizontal direction, such that each region of the moisture-absorbing plane may periodically absorb and dehumidify moisture, thereby improving the moisture absorption and dehumidification efficiency. Moreover, by alternately disposing a plurality of moisture-absorbing passages and a plurality of regenerating passages, it may be ensured that all positions on the moisture-absorbing plane are in an operating state of moisture absorption or dehumidification, thereby improving the moisture absorption and dehumidification efficiency.

According to some embodiments, the moisture-absorbing member may be fixed. The driving mechanism is configured to alternately locate the moisture-absorbing passage and the regenerating passage at the moisture-absorbing member, such that the moisture-absorbing member alternately performs moisture absorption and dehumidification. The driving mechanism, for example, may be implemented as a pipeline switching mechanism; and the moisture-absorbing passage and the regenerating passage are alternately communicated with the moisture-absorbing member by switching pipelines. In this embodiment, since the moisture-absorbing member is fixed, damage to the moisture-absorbing member caused by friction during movement may be avoided, without the need to consider the dynamic sealing problem of the moisture-absorbing member during motion. However, since there is only one moisture-absorbing member, moisture absorption and dehumidification cannot be carried out at the same time, so the drying time of the laundry increases accordingly.

According to some embodiments, a plurality of moisture-absorbing members may be disposed. For example, two moisture-absorbing members, i.e., a first moisture-absorbing member and a second moisture-absorbing member are provided. The driving mechanism is configured to locate the first moisture-absorbing member and the second moisture-absorbing member alternately on the moisture-absorbing passage and the regenerating passage, such that the first moisture-absorbing member and the second moisture-absorbing member alternately perform moisture absorption and dehumidification. Further, since the plurality of moisture-absorbing members is provided, the moisture absorption process of one moisture-absorbing member may be carried out simultaneously with the dehumidification process of the other moisture-absorbing member, such that the laundry drying efficiency may be improved when this embodiment is compared with the previous embodiment.

The driving mechanism, for example, may be implemented as a pipeline switching mechanism; and the moisture-absorbing passage and the regenerating passage are alternately communicated with the first moisture-absorbing member and the second moisture-absorbing member by switching pipelines. In this embodiment, since the first moisture-absorbing member and the second moisture-absorbing member may be fixed, damage to the moisture-absorbing members caused by friction during movement may be avoided, without the need to consider the dynamic sealing problem of the moisture-absorbing members during motion.

FIGs. 44 to 47 show schematic diagrams of an integrated washer-dryer according to some embodiments of the present disclosure.

As shown in FIG. 44, the integrated washer-dryer includes at least two containers 330 configured to hold laundry, a dehumidifying apparatus 350 and a filtering assembly 70. The laundry washing and drying or only laundry drying may be achieved in the containers. The dehumidifying apparatus 350 select one of the containers 330 to dehumidify the laundry inside the container; and the filtering assembly 70 is configured to filter the airflow, which flows from the container 330 and is to enter the dehumidifying apparatus 350. The plurality of containers 330 share one dehumidifying apparatus 350, which simplifies the structure and reduces the overall height or width of the laundry treating device, thereby reducing the volume and cost of the overall device. Use of the filtering assembly 70 may prevent foreign matters such as waddings from entering the dehumidifying apparatus 350 or covering the surface of the dehumidifying apparatus 350 and thus affecting the dehumidifying effect. The dehumidifying apparatus 350 may be implemented, for example, as a drying module assembly 20 or a drying module assembly 2000 in the above embodiments.

Each container 330 includes an air inlet path 32 and an air outlet path 34.

The dehumidifying apparatus 350 selects one of the containers 330 to dehumidify the laundry in the container, and includes an air inlet section 522 for connecting with the air outlet path 34 of the container 330 and an air outlet section 524 for connecting with the air inlet path 32 of the container 330.

In some embodiments, the dehumidifying apparatus 350 includes a moisture-absorbing passage 520, a dehumidifying passage 540 and a moisture-absorbing and dehumidifying member 560.

The moisture-absorbing and dehumidifying member 560 may be rotatably disposed on the moisture-absorbing passage 520 and the dehumidifying passage 540, for absorbing moisture in the circulating airflow discharged from the container 330 into the moisture-absorbing passage 520 during rotation, and discharging the moisture through the dehumidifying airflow of the dehumidifying passage 540. In some embodiments, the moisture-absorbing and dehumidifying member 560 includes a moisture-absorbing region 520 communicated with the moisture-absorbing passage 520, and a dehumidifying region communicated with the dehumidifying passage 540. In some embodiments, the moisture-absorbing and dehumidifying member 560 is a disc-like structure having a certain thickness, and is made of a material with a relatively high absorption capacity, such as cotton cloth and fiber. The moisture-absorbing and dehumidifying member 560 may be driven by a driving mechanism (not shown), such as a drive motor, thereby rotating relative to the moisture-absorbing passage 520 and the dehumidifying passage 540.

The moisture-absorbing passage 520 includes an air inlet section 522 located on an air inlet side of the moisture-absorbing and dehumidifying member 560 (specifically the dehumidifying region of the moisture-absorbing and dehumidifying member 560), and an air outlet section 524 located on an air outlet side of the moisture-absorbing and dehumidifying member 560 (specifically the dehumidifying region of the moisture-absorbing and dehumidifying member 560). The air inlet section 522 of the moisture-absorbing passage 520 forms the air inlet section 522 of the dehumidifying apparatus 350, and the air outlet section 524 of the dehumidifying passage 520 forms the air outlet section 524 of the dehumidifying apparatus 350. The air inlet section 522 and the air outlet section 524 of the moisture-absorbing passage 520 are in fluid communication with the air outlet path 34 and the air inlet path 32 of one of the containers 330, respectively. For example, when it is necessary to dry the laundry in one of the containers 330, the air inlet section 522 and the air outlet section 524 of the moisture-absorbing passage 520 are in fluid communication with the air outlet path 34 and the air inlet path 32 of the container 330, respectively, while the communications with the air outlet path 34 and the air inlet path 32 of the other containers 330 are cut off. Further, a fan 526 is disposed in the moisture-absorbing passage 520 to form a circulating airflow inside the container 330 and the moisture-absorbing passage 520. In some embodiments, a heater is disposed in the air outlet section 524 of the moisture-absorbing passage 520 to increase the temperature of a dry airflow entering the container to be dried 330, thereby increasing a drying speed of the laundry in the container to be dried 330. In some embodiments, a denser is disposed inside the air inlet section 522 of the moisture-absorbing passage 520 for pre-dehumidification of the airflow discharged from the container to be dried 330. The condenser may be disposed upstream of an airflow direction of the filtering assembly 70, which on the one hand, may reduce the humidity of the airflow entering the moisture-absorbing and dehumidifying member 560, and on the other hand, may take away part of waddings directly through the condensate water, thereby increasing the single use time of the filter 720, in other words, reducing the cleaning frequency of the filtering assembly 70. A heater 542, a heat exchanger 544 and a fan 546 are disposed inside the dehumidifying passage 540. In some embodiments, the heater 542 is located on the air inlet side of the dehumidifying region, and the heat exchanger 544 is located on the air outlet side of the dehumidifying region. The fan 546 produces a forced airflow in the operation process, the airflow is heated when passing through the heater 542, and the heated dry airflow flows through the dehumidifying region, thereby taking away the moisture in the dehumidifying region. It may be understood that, the heater 542 may also be located at a position, close to the moisture-absorbing and dehumidifying member 560, on the air outlet side of the dehumidifying region, and configured to heat the dehumidifying region of the moisture-absorbing and dehumidifying member 560, thereby accelerating moisture desorption in the dehumidifying region. In some embodiments, no heater 542 may be provided, but the heat exchanger 544 in an exhaust section is used for airflow heating. A filtering apparatus, such as a filter screen, may be disposed inside the air inlet section of the dehumidifying passage 540. In one example, the filtering apparatus is located upstream of the dehumidifying region and/or heater 542 and/or fan 546 to protect the dehumidifying region and/or heater 542 and/or fan 546. In the operating process, an airflow (usually a moist airflow) discharged from the container to be dried 330 passes through the filtering assembly 70 and into the moisture-absorbing region. A portion of the moisture-absorbing and dehumidifying member 560, which is located in the moisture-absorbing region, adsorbs the moisture (i.e., water vapor) in the airflow flowing therethrough, such that the humidity of the airflow flowing through this portion is reduced and a dry airflow is formed, and the dry airflow flowing out from the moisture-absorbing region then flows back to the container 330 through the air outlet section 524 of the moisture-absorbing passage 520 and the air inlet path 32 of the container 330 for the next cycle, thereby forming a circulating airflow until the humidity in the container 330 reaches a predetermined target. A portion of the moisture-absorbing and dehumidifying member 560, which is located in the moisture-absorbing region and has adsorbed moisture, enters the dehumidifying region with the rotation of the moisture-absorbing and dehumidifying member 560, the moisture is taken away by the heated dry airflow in the dehumidifying region, such that the dry portion of the moisture-absorbing and dehumidifying member 560 may adsorb moisture again when rotating to the moisture-absorbing region next time.

Referring to FIG. 45, in some embodiments, the heat exchanger 544 includes a cooling passage 5442 allowing a cooling medium such as condensate water to pass through, a ventilation passage 5444 allowing an airflow to pass through, and a condensate water discharge port 5446. The moist hot airflow flowing from the dehumidifying region of the dehumidifying apparatus 350 exchanges heat with the cooling passage 5442 while passing through the heat exchanger 544; most of the moisture condenses into condensate water, and is discharged from the condensate water discharge port 5446; and the cooled dry airflow is discharged from an exhaust port 5448 of the ventilation passage 5444 of the heat exchanger 544. In one example, the exhaust port 5448 is communicated with the air inlet of the fan 546, such that a circulation loop is formed in the dehumidifying passage 540, and the impact on the external environment may be reduced.

Referring to FIG. 46, in some embodiments, the exhaust port 5448 of the heat exchanger 544 may be communicated with the outside of the integrated washer-dryer, such that the airflow treated by the heat exchanger 544 may be directly discharged to the outside of the integrated washer-dryer.

Referring to FIG. 47, in some embodiments, the inlet air path 5462 of the fan 546 passes through the interior of the heat exchanger 544, the moist hot airflow flowing out of the dehumidifying region of the dehumidifying apparatus 350 exchanges heat with a cold airflow inside the air inlet path 5462 of the fan 546 while flowing through the heat exchanger 544, thereby removing moisture in the moist hot airflow and reducing the temperature of the moist hot airflow, and is finally discharged from the exhaust port 5448 of the heat exchanger 544; and the airflow in the air inlet path 5462 of the fan 546 is preheated while flowing through the heat exchanger 544, such that the energy may be partially recycled, thereby achieving energy saving.

It may be understood that, in some embodiments, the heat exchanger 544 may also be omitted, and the airflow discharged from the air outlet side of the dehumidifying passage 540 is directly discharged to the outside of the integrated washer-dryer.

The dehumidifying apparatus 350 may be selectively in fluid communication with any of the containers 330 through switching mechanisms 90, 92, 94. The switching mechanisms 90, 92, 94 may be valves, solenoid valves and other forms.

In some embodiments, the moisture-absorbing passage 520 of the dehumidifying apparatus 350 may be selectively in fluid communication with any of the containers 330 through the switching mechanisms 90, 92, 94. In some embodiments, the switching mechanisms 90, 92, 94 include a first switching mechanism 90 disposed at the junction between the air outlet section 524 of the dehumidifying apparatus 350 and the air inlet path 32 of the container 330, and the second switching mechanisms 92, 94 disposed on the air outlet path 34 of the container 330. The first switching mechanism 90 and the second switching mechanisms 92, 94 may communicate one of the containers 330 with the air outlet section 524 and the air inlet section 522 of the dehumidifying apparatus 350 as needed, respectively, and cut off the connection between the other containers 330 and the air outlet section 524 and the air inlet section 522 of the dehumidifying apparatus 350. The first switching mechanism 90/the second switching mechanisms 92, 94 may be disposed at the junction between the air outlet section 524/air inlet section 522 of the dehumidifying apparatus 350 and the air inlet path 32/air outlet path 34 of the container 330. As an alternative scheme, at least one first switching mechanism 90/second switching mechanism 92 may be provided, which are disposed in the inlet air path 32/air outlet path 34 of each container 330, respectively. FIG. 44 shows a case where two second switching mechanisms 92 and 94 are provided. According to needs, the switching mechanisms 90/92, 94 in the air inlet path 32/air outlet path 34 of one of the containers 330 may be chosen to be opened, while the switching mechanisms 90/92, 94 in the air inlet path 32/air outlet path 34 of other containers 330 may be chosen to be closed, such that one of the containers 330 is in fluid communication with the dehumidifying apparatus 350, and the fluid connection between the other containers 330 and the dehumidifying device 350 is cut off. The filtering assembly 70 is configured to filter the airflow discharged from the container 330, before this airflow enters the dehumidifying apparatus 350, to prevent foreign matters such as waddings discharged from the container 330 from entering the dehumidifying apparatus 350, for example, to prevent the situation that the foreign matters such as waddings discharged from the container 330 enter the moisture-absorbing and dehumidifying member 560 or cover the surface of the moisture-absorbing and dehumidifying member 560 to affect the dehumidification effect of the moisture-absorbing and dehumidifying member 560.

The filtering assembly 70 is configured to filter the airflow discharged from the container 330 , before this airflow to enters the dehumidifying apparatus 350, to prevent foreign matters such as waddings discharged from the container 330 from entering the dehumidifying apparatus 350, for example, to prevent the situation that the foreign matters such as waddings discharged from the container 330 enter the moisture-absorbing and dehumidifying member 560 or cover the surface of the moisture-absorbing and dehumidifying member 560 to affect the moisture-absorbing and dehumidifying effects of the moisture-absorbing and dehumidifying member 560.

In some embodiments, the filtering assembly 70 is disposed in the air inlet section 522 of the dehumidifying apparatus 350, i.e., between the second switching mechanism and the dehumidifying apparatus (in particular the moisture-absorbing and dehumidifying member 560). It may be understood that the filtering assembly 70 may also be disposed on the air outlet path 34 of the container 330, and the second switching mechanism may be located downstream of the filtering assembly 70 along the airflow direction (i.e., along the airflow direction, the filtering assembly 70 is located between the second switching mechanism and the container 330 or the second switching mechanism is located between the filtering assembly 70 and the dehumidifying apparatus 350); or the second switching mechanism may be located upstream of the filtering assembly 70 along the airflow direction (i.e., the second switching mechanism along the airflow direction is located between the filtering assembly 70 and the container 330 or the filtering assembly 70 is located between the second switching mechanism and the dehumidifying apparatus 350); and in one embodiment, one or more filtering assemblies 70 may be provided, it is disposed on the air inlet section 522 of the dehumidifying apparatus 350 in the case of one filtering assembly, and they may be disposed on the air outlet paths 34 of the plurality of containers 330 respectively in the case of a plurality of filtering assemblies.

The filtering assembly 70 includes a filter 720 and an automatic cleaning apparatus 740 of the filter; or the filtering assembly 70 includes a detachable filter 720 and a mounting bracket thereof. In the case that the filter 720 is a detachable filter, the user may manually clean the filter 720 according to sensing data of the sensor. Of course, the filter may also be cleaned after an operation is completed each time, or may be cleaned irregularly. The specific cleaning mode may be to rinse, wipe, etc. the filter 720 after it is manually removed.

The specific form of the filter 720 may be, but not limited to, a filter screen, the number of meshes of which may be set as needed. The number of filters 720 is not limited. For example, in the case of primary filtration, the filter 720 is disposed on the air outlet path 34 of the container 330 or the air inlet section 522 of the dehumidifying apparatus 350; and in the case of two-stage or multi-stage filtration, the filter 720 is disposed on the air outlet path 34 of the container 330 and the air inlet section 522 of the dehumidifying apparatus 350, thereby enhancing a filtering effect.

The automatic cleaning apparatus 740 of the filter is configured to automatically clean the filter 720 to ensure the filtering function of the filter 720. The cleaning mode may be a liquid spraying mode, a vibration mode, an air blowing mode or a scraping mode. For example, the automatic cleaning apparatus 740 of the filter includes a spraying mechanism 740 configured to spray the filter 720, a vibration mechanism configured to vibrate the filter 720 (e.g., vibrate the filter screen using a vibration motor), and an air blowing mechanism configured to blow air to the filter 720 (e.g., the fan 526 in the moisture-absorbing passage 520 may rotate reversely to generate a reverse airflow, that is, a direction of the airflow flowing through the filter 720 during cleaning is opposite to a direction of the airflow flowing through the filter 720 during drying, such that the effect is better especially when the fan 526 is disposed in the air inlet section 522 of the moisture-absorbing passage 520; and of course, a fan which is configured to blow air to the filter 720 reversely may also be provided specially); or a scraping mechanism, such as a scraping plate, configured to scrape the filter 720, wherein the scraping plate may be a manual scraping plate or an electric scraping plate, and a control system controls, while detecting that the filter 720 is blocked to a certain extent, the electric scraping plate to scrape along an adsorption surface of the filter 720 to clean up waddings and other debris adhered thereon. The controller for the integrated washer-dryer may control the automatic cleaning apparatus 740 of the filter to actively clean the filter 720.

A detailed description will be given by taking a liquid spraying mode as an example. The spraying mechanism 740 includes a nozzle 742 and a water supply system 744 configured to supply water to the nozzle. The nozzle 742 is directly opposite the filter 720, the water supply system 744 is connected to a water inlet channel (not shown) of the integrated washer-dryer by a switch such as a valve (not shown), and the switch may be turned on or off by the controller of the integrated washer-dryer. In one example, the nozzle 742 of the spraying mechanism 740 is disposed on the side of the filter 720 near the dehumidifying apparatus 350 (i.e., the side away from the air outlet of the container 330), and waddings and other foreign matters discharged from the container 330 are generally adsorbed on the side of the filter 720 away from the dehumidifying apparatus 350 (i.e., the side close to the air outlet of the container 330). Thus, a direction, in which a fluid, such as water, sprayed by the spraying mechanism 74 flows through the filter 720 is opposite to a direction, in which the airflow discharged from the container 330 flows through the filter 720. In this way, the fluid sprayed by the spraying mechanism 740 is easier to detach the waddings adsorbed on the filter 720 from the filter 720, and enters a water drainage passage of the integrated washer-dryer together with the water flow and is thus discharged out of the integrated washer-dryer. For example, in the case that the filter 720 (i.e., the filter screen) is disposed obliquely in the air outlet passage of the container 330 or the air inlet section 522 of the moisture-absorbing passage 520, the nozzle 742 of the spraying mechanism 740 is disposed on the side of the filter screen close to the dehumidifying apparatus 350 and is located above a middle line of the filter screen, such that the liquid sprayed from the nozzle 744 may cover the entire filter screen as much as possible, thereby effectively cleaning the filter screen. It may be understood that, the filter screen may also be disposed horizontally, vertically, partially tilted and partially vertically, or partially horizontally and partially tilted, etc., and the spraying direction of the nozzle 742 is set to facilitate spraying the full area of the filter 720 as fully as possible when the automatic cleaning process is started.

In the case of liquid spraying mode, the filter 720 and the automatic cleaning apparatus of the filter may be located in the air inlet section 522 of the dehumidifying passage. The used fluid may be discharged out of the integrated washer-dryer after flowing to the water discharge passage of one of the containers 330, which is in fluid communication with the air inlet section 522, from the air inlet section 522 of the moisture-absorbing passage via the air outlet path 34 of the container 330 (for example, when the containers 330 are stacked vertically, in the progress of cleaning or upon cleaning completion, the lower container 330 is communicated with the air inlet section 522 of the moisture-absorbing passage, while the communication between the upper container 330 and the air inlet section 522 of the dehumidifying passage is cut off by the second switching mechanism 92). For example, when it is necessary to dry the laundry in the upper container 330 in FIG. 44, the controller may control the first switching mechanism 90 to communicate the air outlet section 524 of the dehumidifying apparatus 350 and the air inlet path 32 of the upper container 330 and cut off the communication between the air outlet section 524 of the dehumidifying apparatus 350 and the air inlet path 32 of the lower container 330; meanwhile, the controller may control the second switching mechanism 92 in the air outlet path 34 of the upper container 330 to communicate the air inlet section 522 of the dehumidifying apparatus 350 and the air outlet path 34 of the upper container 330, and may control the second switching mechanism 94 located in the air outlet path 34 of the lower container 330 to cut off the communication between the air inlet section 522 of the dehumidifying apparatus 350 and the air outlet path 34 of the lower container 330. When it is necessary to dry the laundry in the lower container 330 in FIG. 44, the controller may control the first switching mechanism 90 to communicate the air outlet section 524 of the dehumidifying apparatus 350 and the air inlet path 32 of the lower container 330 and cut off the communication between the air outlet section 524 of the dehumidifying apparatus 350 and the air inlet path 32 of the upper container 330; meanwhile, the controller may control the second switching mechanism 94 in the air outlet path 34 of the lower container 330 to communicate the air inlet section 522 of the dehumidifying apparatus 350 and the air outlet path 34 of the lower container 330, and may control the second switching mechanism 92 located in the air outlet path 34 of the upper container 330 to cut off the communication between the air inlet section 522 of the dehumidifying apparatus 350 and the air outlet path 34 of the upper container 330. When the filter 720 needs to be cleaned upon the completion of cleaning, the controller controls the second switching mechanism 92 located in the air outlet path 34 of the upper container 330 to cut off the communication between the air inlet section 522 of the dehumidifying apparatus 350 and the air outlet path 34 of the upper container 330, and controls the second switching mechanism 94 located in the air outlet path 34 of the lower container 330 to communicate the air inlet section 522 of the dehumidifying apparatus 350 and the air outlet path 34 of the lower container 330, and the used liquid may flow through the air outlet path 34 of the lower container 330 and is discharged through a water drainage passage of the lower container 330; and the air outlet path 34 of the lower container 330 and the water drainage passage of the lower container 330 may be communicated or disconnected by a valve.

That is, in the process of drying the laundry in the upper container 330, the second switching mechanism 92 communicates the air outlet path 34 of the upper container 330 and the air inlet section 522 of the dehumidifying apparatus 350, while the second switching mechanism 94 cut off the communication between the air outlet path 34 of the lower container 330 and the air inlet section 522 of the dehumidifying apparatus 350. When the filter 720 is cleaned by spraying, the second switching mechanism 94 is controlled to be opened for a short time to discharge spraying water to the lower container 330 or the water drainage passage. In the process of drying the laundry in the lower container 330, the second switching mechanism 92 always cut off the communication between the air outlet path 34 of the upper container 330 and the air inlet section 522 of the dehumidifying apparatus 350, while the second switching mechanism 94 always communicates the air outlet path 34 of the lower container 330 and the air inlet section 522 of the dehumidifying apparatus 350. Therefore, the airflow of the lower container 330 may flow through the filter 720 and to the dehumidifying apparatus, while liquid for cleaning the filter 720 by spraying flows to the lower container 330 or the water drainage passage in a direction opposite to that of the above airflow.

In the case of a liquid spraying mode, the filter 720 and the automatic cleaning apparatus 740 of the filter may also be disposed on the air outlet path 34 of the container 330. For example, the filter 720 and the automatic cleaning apparatus 740 of the filter may be disposed on the air outlet path 34 of each container 330, and the used liquid may flow through the air outlet path 34 of the corresponding container 330 and is then discharged through the water drainage passage of the container 330.

It may be understood that the water flow of the automatic cleaning apparatus 740 of the filter may flow through a separately disposed fluid pipeline and to a water storage barrel or water drainage pipeline of one container, e.g., the water storage barrel or water drainage pipeline of the bottommost container 330. At this time, only a second switching mechanism needs to be disposed at the junction between the air outlet path 34 of the upper container 330 and the air outlet path 34 of the lower container 330, which just switches the communication between the air outlet paths 34 of the upper and lower containers and the air inlet section of the dehumidifying apparatus 350.

The cleaning frequency may be set as required. For example, the filter 720 is cleaned once after each dehumidification of the laundry. The filter 720 may also be cleaned after multiple dehumidification of the laundry. Parameters such as a spray time and a water spraying velocity of each cleaning treatment may be set as required. The spray time and the water spraying velocity of each cleaning treatment may be fixed or adjusted as needed. For example, if the filter 720 is cleaned once after each dehumidification of the laundry, the spray time may be relatively short and the water spraying velocity may be relatively low accordingly. However, if the filter 720 is cleaned once after multiple dehumidification of the laundry, the spray time may be relatively long and the water spraying velocity may be relatively high accordingly. Alternatively, a sensor may be disposed on the filter 720. If the sensor senses that the filter 720 is blocked more seriously, for example, an air pressure sensor on the path senses that an air pressure on the pipeline is reduced to a certain threshold, which indicates that the filter has been blocked more seriously, the controller of the integrated washer-dryer may increase the spray time and/or water spraying velocity of the spraying mechanism, thereby increasing the cleaning intensity.

The container 330 configured to hold the laundry may be a laundry treating barrel of the integrated washer-dryer; and at least two containers 330 configured to hold laundry may be stacked vertically or horizontally. For example, the integrated washer-dryer shown in FIG. 44 consists of an upper laundry treating barrel and a lower laundry barrel which are stacked vertically. It may be understood that for the integrated washer-dryer shown in FIG. 44, the upper laundry treating barrel may be a drying barrel and the lower laundry treating barrel may be a washing barrel; or the lower laundry treating barrel may be a drying barrel and the upper laundry treating barrel may be a washing barrel; or the upper laundry treating barrel and the lower laundry treating barrel are both integrated washing-drying barrels.

Although the above embodiments describe a laundry drying scheme in which a plurality of containers shares one dehumidifying apparatus by taking the integrated washer-dryer as an example, it may be understood that the above laundry drying scheme is also suitable for dryers that only have a laundry drying function (but not a laundry washing function), i.e., the laundry treating device shown in FIG. 44 may also be a dryer. Accordingly, the container 330 configured to hold laundry includes an upper drying barrel and a lower drying barrel which are stacked vertically.

An embodiment of the present disclosure further provides a method for using an integrated washer-dryer. The method includes the following steps:
a dehumidifying step: fluidly communicating a dehumidifying apparatus with one of the containers and dehumidifying, by the dehumidifying apparatus, laundry inside the container, wherein airflow flowing from the container enters the dehumidifying apparatus after flowing through a filtering assembly; and
a cleaning step: cleaning the filter by an automatic cleaning apparatus of the filter.

In some embodiments, the dehumidifying step further includes: controlling the temperature of the airflow entering the container after discharge from the dehumidifying apparatus to be lower than a predetermined temperature. In one example, a temperature sensor may be disposed near an air inlet of the container. When the sensor senses that the temperature of the airflow entering the air inlet of the container is higher than the predetermined temperature, e.g., 75 °C, the controller will control a heating temperature of a heater, for example, reduce its heating temperature, thereby reducing the temperature of the airflow entering the dehumidifying region. Correspondingly, the temperatures of moisture-absorbing and dehumidifying members are reduced, thereby reducing the temperature of the airflow flowing out of the moisture-absorbing region and into the container.

The automatic cleaning apparatus of the filter may clean the filter in a spray mode, an air-blowing mode, a vibration mode or a scraping mode, etc.

The integrated washer-dryer provided by the above embodiments has at least the following characteristics.

A plurality of containers share the same dehumidifying apparatus, which may simplify the structure of the laundry treating device and reduce the overall height or width of the laundry treating device, thereby reducing the volume and cost of the overall device; the use of the filter may prevent foreign matters such as waddings from entering the dehumidifying apparatus or covering the surface of the dehumidifying apparatus and thus affecting the dehumidifying effect; and the filtering assembly includes the automatic cleaning apparatus of the filter, which is used to automatically clean the filter to ensure that the filtering function does not decrease with the use time, so as to greatly protect the dehumidifying apparatus and extend the service life of the dehumidifying apparatus.

Although embodiments of the present disclosure have been described with reference to the accompanying drawings, it should be understood that the scope of the present disclosure is not limited by these embodiments or examples, but only by the granted claims and their equivalent scope. Various elements in the embodiments or examples may be omitted or may be replaced with their equivalents. It should also be understood that as technologies evolve, many of the elements described herein may be replaced with equivalents that appear after the present disclosure.

It should be understood that in the description of the present disclosure, the orientation or position relations or sizes indicated via terms of "central", "longitudinal", "transverse", "length", "width", "thickness", "upper", "lower", "front", "rear", "left", "right", "vertical" "horizontal", "top", "bottom", "inner", "outer", "clockwise", "counterclockwise", "axial", "radial", "circumferential" and the like are based on orientation or the position relations or sizes shown in the drawings, and these terms are only to describe the present disclosure conveniently, but do not indicate or imply that referred devices or elements must have particular orientations or be constructed and operated with the particular orientation, and thus cannot be construed as limiting of the protection scope of the present disclosure.

Moreover, the terms "first", "second", "third" and the like are only for the purpose of description and should not be construed as indicating or implying relative importance or implicitly indicating the number of technical features indicated. Thus, the features defined by the terms "first", "second" and "third" may include one or more of the features either explicitly or implicitly. In the description of the present disclosure, unless otherwise stated, the term "a plurality of" means two or more.

In the present disclosure, unless otherwise definitely specified and limited, the terms "mounted", "connection", "connected", "fixed", and the like need to be broadly understood, for example, connection may be fixed connection, or detachable connection or integrated connection; or may be mechanical connection, or electrical connection, or communication; or may be direct connection, or indirect connection via an intermediation, or communication of inner parts of two elements, or an interaction relationship between two elements. A person of ordinary skill in the art may understand the specific meaning of the above terms in the present disclosure in accordance with specific conditions.

In the present disclosure, unless otherwise definitely specified and limited, the first feature being provided "above" or "below" the second feature may mean that the first feature is in direct contact with the second feature, or mean that the first and second features are not in direct contact, but via an additional feature therebetween. Moreover, the first feature being provided "over", "above", and "on" the second feature may mean that the first feature is provided directly above, or above and staggered from the second feature, or merely means that a level of the first feature is higher than the second feature. The first feature being provided "under", "below", and "beneath" the second feature may mean that the first feature is provided directly below, or below and staggered from the second feature, or merely means that a level of the first feature is lower than the second feature.

The present description provides many different embodiments or examples that may be used to implement the present disclosure. It should be understood that these different embodiments or examples are entirely exemplary. Therefore, the protection scope of the present disclosure should be subject to the protection scope defined by the appended claims.

## Claims

1. A laundry treating device, comprising:
an inner tub, configured to accommodate laundry to be treated; and
a drying module assembly, configured to dry the laundry, wherein the drying module assembly comprises:
a moisture-absorbing passage, comprising a first air inlet and a first air outlet, wherein the first air inlet and the first air outlet are communicated with the inner tub respectively;
a circulating fan, disposed inside the moisture-absorbing passage and configured to form a circulating airflow inside the inner tub and the moisture-absorbing passage;
a regenerating passage;
a regenerating fan, disposed inside the regenerating passage and configured to form a dehumidifying airflow inside the regenerating passage;
a moisture-absorbing member, disposed on the moisture-absorbing passage and the regenerating passage, the circulating airflow and the dehumidifying airflow both flowing through the moisture-absorbing member; and
a driving mechanism, configured to move the moisture-absorbing member relative to the moisture-absorbing passage and the regenerating passage,
wherein the moisture-absorbing member is configured to absorb moisture in the circulating airflow in the process of moving relative to the moisture-absorbing passage and the regenerating passage, and discharge the moisture absorbed through the dehumidifying airflow.

2. The device according to claim 1, wherein
the moisture-absorbing member is provided with a moisture absorbent, the moisture absorbent comprises at least one of zeolite, alkali metal aluminosilicate, lithium chloride, silica gel, modified silica gel or activated alumina; and
the drying module assembly further comprises a dehumidifying assembly, the dehumidifying assembly is disposed on the regenerating passage and configured to desorb moisture absorbed by the moisture absorbent, and the dehumidifying assembly comprising at least one of a heating assembly, an ultrasonic generator or a microwave generator.

3. The device according to claim 1 or 2, wherein
the moisture-absorbing member comprises a moisture-absorbing rotary plate; the driving mechanism is configured to drive the moisture-absorbing rotary plate to rotate relative to the moisture-absorbing passage and the regenerating passage; the moisture-absorbing rotary plate comprises a moisture-absorbing region and a regenerating region, wherein the moisture-absorbing region is a region on the moisture-absorbing rotary plate through which the circulating airflow flows, and the regenerating region is a region on the moisture-absorbing rotary plate through which the dehumidifying airflow flows; and
the drying module assembly further comprises a heating assembly disposed on the regenerating passage and covering the regenerating region.

4. The device according to claim 3, wherein the moisture-absorbing member further comprises an upper peripheral clamping housing, a lower peripheral clamping housing and a circumferential shock absorber, wherein the circumferential shock absorber is disposed on an outer circumference of the moisture-absorbing rotary plate or an inner circumference of the housing, and the moisture-absorbing rotary plate and the circumferential shock absorber are clamped and fixed by the upper peripheral clamping housing and the lower peripheral clamping housing.

5. The device according to claim 4, wherein a first sealing ring is disposed on an outer circumference of a junction between the upper peripheral clamping housing and the lower peripheral clamping housing.

6. The device according to claim 4 or 5, wherein
drive teeth are disposed on an outer circumference of the upper peripheral clamping housing or an outer circumference of the lower peripheral clamping housing; and
the driving mechanism is a drive motor, a gear is disposed on an output end of the drive motor, and the gear is meshed with the drive teeth to drive the moisture-absorbing member to rotate.

7. The device according to any one of claims 4 to 6, wherein
the drying module assembly comprises a lower housing, the lower housing is provided with a first mounting part for mounting the moisture-absorbing member, and a first roller is disposed on an inner sidewall of the first mounting part; and
an auxiliary rotating ring is disposed on the outer circumference of the upper peripheral clamping housing or the outer circumference of the lower peripheral clamping housing, and the auxiliary rotating ring is in rolling fit with the first roller.

8. The device according to claim 7, wherein a second roller is disposed on a bottom surface of the first mounting part, and is in rolling fit with a lower surface of the lower peripheral clamping housing.

9. The device according to claim 7 or 8, wherein
a short shaft is disposed in a center of the first mounting part;
the moisture-absorbing member further comprises an upper central clamp, a lower central clamp, and a central end surface shock absorber;
a first hole is defined in a center of the moisture-absorbing rotary plate, a second hole is defined in a center of the upper central clamp, and a third hole is defined in a center of the lower central clamp; and
the upper central clamp and the lower central clamp pass through the first hole to clamp and fix the moisture-absorbing rotary plate; the second hole and the third hole is fitted over the short shaft, so as to connect the moisture-absorbing member and the lower housing rotatably; and the central end surface shock absorber is disposed between the lower central clamp and the moisture-absorbing rotary plate.

10. The device according to any one of claims 3 to 9, wherein the moisture-absorbing rotary plate further comprises a cooling region; and the cooling region is located downstream of the regenerating region and upstream of the moisture-absorbing region along a rotation direction of the moisture-absorbing rotary plate.

11. The device according to claim 3, wherein
the drying module assembly comprises a lower housing and an upper housing, wherein the lower housing is provided with a first mounting part for mounting the moisture-absorbing member, the upper housing is provided with a second mounting part for mounting the moisture-absorbing member, and the moisture-absorbing member is rotatably connected inside a space defined by the first mounting part and the second mounting part; and
the first mounting part is provided with a first separator, the second mounting part is provided with a second separator, the second separator is located directly above the first separator, and the first separator and the second separator separate the moisture-absorbing rotary plate into the moisture-absorbing region and the regenerating region.

12. The device according to claim 11, wherein the first mounting part is further provided with a third separator configured to separate a circulating airflow that flows into the moisture-absorbing region.

13. The device according to claim 11 or 12, wherein a first sealing member is disposed between the moisture-absorbing member and the first separator, and fixed on an upper end surface of the first separator.

14. The device according to claim 13, wherein a second sealing member is disposed between the moisture-absorbing member and the second separator, and the second sealing member is fixed on a lower end surface of the second separator and located directly above the first sealing member.

15. The device according to claim 11 or 12, wherein an end surface, opposite to the moisture-absorbing member, of one of the first separator and the second separator is provided with a sealing member, and an end surface, opposite to the moisture-absorbing member, of the other of the first separator and the second separator is not provided with a sealing member and is spaced apart from the moisture-absorbing member by a preset distance.

16. The device according to claim 11 or 12, wherein an end surface, opposite to the moisture-absorbing member, of one of the first separator and the second separator is provided with a first sealing member, and the first sealing member is in contact with the moisture-absorbing member; and
an end surface, opposite to the moisture-absorbing member, of the other of the first separator and the second separator is provided with a second sealing member, the second sealing member is spaced apart from the moisture-absorbing member by a preset distance.

17. The device according to claim 3, wherein the drying module assembly comprises an upper housing, the heating assembly is disposed on the upper housing, and a heat shield ring and a second sealing ring are disposed between the heating assembly and the upper housing.

18. The device according to claim 3 or 17, wherein
the heating assembly comprises a sector-shaped housing, and a mesh plate and a heating pipe which are disposed in the sector-shaped housing, the heating pipe being disposed below the mesh plate, and the mesh plate comprising a plurality of air holes; and
an air inlet is defined in a circumferential side or a radius side of the sector-shaped housing, and the dehumidifying airflow flows through the air inlet, the plurality of air holes in the mesh plate and the heating pipe in sequence, and to the regenerating region.

19. The device according to claim 18, wherein diameters of the plurality of air holes decrease along a flow direction of the dehumidifying airflow.

20. The device according to claim 18 or 19, wherein the heating pipe is offset towards a direction of a center of the sector-shaped housing relative to the plurality of air holes.

21. The device according to any one of claims 18 to 20, wherein
a third mounting part is formed on a sidewall of the sector-shaped housing or a lower wall of the sector-shaped housing extends outward to form a third mounting part; and
the heating assembly further comprises a temperature sensor disposed on the third mounting part.

22. The device according to claim 1 or 2, further comprising a filter, wherein the filter is disposed at at least one of
upstream of the moisture-absorbing member in the moisture-absorbing passage, upstream of the regenerating fan in the regenerating passage, or downstream of the moisture-absorbing member in the regenerating passage.

23. The device according to claim 22, further comprising a cleaning assembly configured to clean the filter automatically, the cleaning assembly comprising at least one of
a spraying mechanism configured to spray the filter, a vibration mechanism configured to vibrate the filter, an air blowing mechanism configured to blow air to the filter, or a scraping mechanism configured to scrape the filter.

24. The device according to claim 23, wherein the cleaning assembly comprises a spraying mechanism, wherein the spraying mechanism is disposed downstream of the filter and a flow direction of a liquid sprayed by the spraying mechanism is opposite to a direction of an airflow flowing through the filter.

25. The device according to claim 24, wherein
the filter comprises a filter screen disposed obliquely inside the moisture-absorbing passage and the regenerating passage; and
the spraying mechanism comprises a water outlet pipe and a nozzle, wherein one end of the nozzle is connected to the water outlet pipe, and the other end of the nozzle is flat and covers an end of the filter screen close to the water outlet pipe.

26. The device according to claim 1 or 2, wherein the moisture-absorbing member comprises a first moisture-absorbing member and a second moisture-absorbing member, and the driving mechanism is configured to enable the first moisture-absorbing member and the second moisture-absorbing member to be located on the moisture-absorbing passage and the regenerating passage alternately.

27. The device according to claim 1 or 2, wherein the moisture-absorbing member comprises a moisture-absorbing strip, and the driving mechanism is configured to drive the moisture-absorbing strip to perform a linear motion relative to the moisture-absorbing passage and the regenerating passage.

28. The device according to claim 1 or 2, further comprising a housing, wherein a side surface of the housing is provided with a second air inlet and a second air outlet, the second air inlet being communicated with an air inlet end of the regenerating passage, and the second air outlet being communicated with an air outlet end of the regenerating passage.

29. The device according to claim 28, wherein a condenser is disposed in at least one of the air inlet end or the air outlet end.

30. The device according to claim 1 or 2, wherein a condenser is disposed downstream of the moisture-absorbing member in the regenerating passage, an air outlet of the condenser being communicated with an air inlet of the regenerating fan, such that the regenerating passage forms a closed loop.

31. The device according to claim 29 or 30, wherein a condenser is disposed between an air outlet of the inner tub and the moisture-absorbing member.

32. The device according to any one of claims 29 to 31, wherein the condenser comprises a serpentine pipe configured to circulate condensate water.

33. The device according to claim 1 or 2, further comprising a housing, wherein the drying module assembly comprises a lower housing provided with a fourth mounting part, and the fourth mounting part is fixed to the housing in a lap joint manner such that the drying module assembly is fixed on the housing.

34. The device according to claim 1 or 2, wherein the first air inlet and the first air outlet are connected to the inner tub through flexible pipes, respectively.
